(19) Europäisches Patentamt
European Patent Office
Office européen des brevets

(11) Veröffentlichungsnummer: **0 174 575**
**B1**

(12) # EUROPÄISCHE PATENTSCHRIFT

(45) Veröffentlichungstag der Patentschrift: **02.05.90**

(51) Int. Cl.[5]: **C 09 B 69/00,** D 06 P 3/76, D 21 H 21/28

(21) Anmeldenummer: **85110993.4**

(22) Anmeldetag: **31.08.85**

(54) **Basische Farbstoffe, ihre Herstellung und ihre Verwendung zum Färben von Cellulose.**

(30) Priorität: **13.09.84 DE 3433545**

(43) Veröffentlichungstag der Anmeldung:
**19.03.86 Patentblatt 86/12**

(45) Bekanntmachung des Hinweises auf die Patenterteilung:
**02.05.90 Patentblatt 90/18**

(84) Benannte Vertragsstaaten:
**CH DE FR GB LI**

(56) Entgegenhaltungen:
**EP-A-0 061 624**
**US-A-2 127 236**

(73) Patentinhaber: **BAYER AG**
**D-5090 Leverkusen 1 Bayerwerk (DE)**

(72) Erfinder: **Franke, Günter, Dr.**
**Landrat-Trimborn-Strasse 60**
**D-5653 Leichlingen (DE)**
Erfinder: **Ockelmann, Dieter, Dr.**
**Gerstenkamp 10**
**D-5000 Köln 80 (DE)**
Erfinder: **Raue, Roderich, Dr.**
**Berta-von-Suttner-Strasse 48**
**D-5090 Leverkusen 1 (DE)**
Erfinder: **Wild, Peter, Dr.**
**Droste-Hülshoff-Strasse 2**
**D-5068 Odenthal (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 174 575 B1

**Beschreibung**

Gegenstand der Erfindung ist die Verwendung von Farbstoffen der Formel

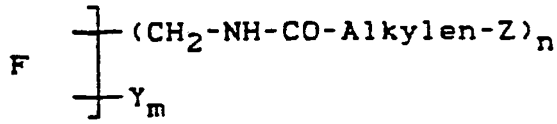

(I)

worin
F für einen organischen Chromophor und
Z für Reste der Formeln

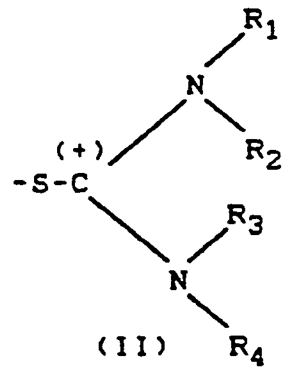

$A^{(-)}$ oder

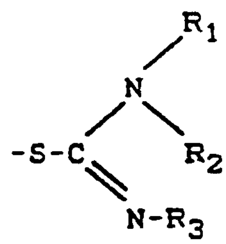

(II) (III)

stehen, worin
$R_1$—$R_4$ Wasserstoff, Alkyl, Cycloalkyl, Alkenyl, Aryl, Aralkyl oder einen Heterocyclus oder
$R_2$ und $R_3$ eine gegebenenfalls substituierte Aminogruppe darstellen oder zusammen eine Ring bilden, oder
$R_1$ mit $R_2$ und/oder $R_3$ mit $R_4$ einen Ring bilden,
$A^{(-)}$ eine Anion,
Y eine anionische Gruppe,
m 0—2 und
n 1—6 bedeuten,
und worin der Chromophor und die genannten Reste weitere Substituenten tragen können mit der Maßgabe, daß die Summe der anionischen Substituenten kleiner ist als die Summe der quartären und quarternierbaren Aminogruppen, zum Färben von Cellulosefasern, insbesondere Papier.

In Formel (I) sind unter einem organischen Chromophor vor allem Chromophore von Azin-, Azo-, Triarylmethan-, Xanthen-, Thioxanthen-, Phthalocyanin-, Carbonyl-, Benzothioxanthen-, Cumarin-, Naphtholactam-, Isoindolenin-, Formazan-, Nitro- und Cyaninfarbstoffen zu verstehen.

Unter Azinfarbstoffen sind dabei Bis- und Monoazinfarbstoffe wie Dioxazin-, Dithiazin-, Phenothiazin- oder Phenoxazinfarbstoffe zu verstehen, unter Carbonylfarbstoffen solche wie Indigoide, Chinophthalone, Anthrachinone, Chinacridone oder carbo- und/oder heteropolycyclische, aromatische Verbindungen mit mindestens zwei CO-Gruppen, wie sie auch aus dem Gebiet der Küpenfarbstoffe bekannt sind.

Die organischen Chromophore können metallisiert vorliegen und substituiert sein. Solche Substituenten sind beispielsweise Halogenatome, wie Fluor, Chlor oder Brom, Alkyl-, Alkoxy-, Aryl-, Aryloxy-, Aralkyl-, Aralkoxy-, Amino-, Alkylamino-, Arylamino-, Alkylthio, Arylthio-, Hydroxy-, Nitro-, Cyano- und Thiocyanogruppen. Mit Alkyl sind hier und im folgenden insbesondere Reste mit 1 bis 4 Kohlenstoffatomen gemeint, mit Aryl insbesondere Phenyl-, Tolyl-, Chlorphenyl-, Methoxy-, Ethoxyphenyl- oder Naphthylreste mit Aralkyl insbesondere der Benzylrest. Besonders wichtige Substituenten sind außerdem die Acyl- und die Acylaminogruppe. Der Begriff Acyl umfaßt vor allem Reste von aromatischen Carbon- oder Sulfonsäuren, insbesondere solchen der Benzolreihe oder niedrigmolekulare, d.h. 1 bis 4 Kohlenstoffatome enthaltende Alkanoyl- oder Alkylsulfonylreste, wie den Acetyl-, Benzoyl-, p-Chlorbenzoyl-, p-Phenylbenzoyl-, Benzolsulfonyl- oder p-Toluolsulfonylrest, ferner niedrigmolekulare Alkylcarbonylreste sowie Sulfonsäureamid- oder Carbonsäureamidgruppen, deren Stickstoffatom mit Alkyl- oder Arylresten substituiert sein kann, wie den Ethoxycarbonyl-, Carbamoyl- oder Sulfamoylrest. Diese Reste sind auch bevorzugte Reste der Chromophore der im folgenden angegebenen Farbstoffe.

Die anionische Gruppe Y stellt, z.B. die Phosphorsäuregruppe, die Carbonsäuregruppe oder die Sulfonsäuregruppe oder eine Salzform wie das Na-, K-, Li- oder Ammonium-Salz dieser freien Säuregruppe dar.

In den Formeln (I) bis (III) ist unter einem Alkylrest vor allem ein Rest mit 1 bis 6 C-Atomen und unter einem Alkylenrest ein Rest mit 1 bis 4 C-Atomen, insbesondere 1 oder 2, zu verstehen.

In den Formeln (II) und (III) stehen außerdem vorzugsweise Aryl bzw. Aralkyl für Phenyl oder Tolyl bzw. Benzyl oder Phenylethyl, Cycloalkyl für Cyclopentyl und Cyclohexyl sowie Alkenyl für einen Rest mit 2 bis 4

C-Atomen. Unter einem Heterocyclus wird vorzugsweise ein 5- oder 6-gliedriger, N, O und/oder S enthaltenden Ring mit einem oder zwei Heteroatomen verstanden.

Dabei kommen als Substituenten bevorzugt in Betracht, Halogen, wie Fluor, Chlor oder Brom, $C_1$—$C_4$-Alkoxy, OH, SH, CN, SCN, $C_1$—$C_4$-Alkoxycarbonyl, Carbonamid, Sulfonamid oder Amino, und für die Ringe außerdem $C_1$—$C_4$-Alkyl und Nitro.

Die durch Verknüpfung von $R_1$ mit $R_2$, von $R_3$ mit $R_4$ oder von $R_2$ mit $R_3$ gebildeten Ringe sind vorzugsweise 5- oder 6-gliedrig und können mit einem weiteren Ring kondensiert sein.

Für Kationen der Gruppen Z der Formel (II) sind Beispiele in Tabelle 1 aufgeführt.

Tabelle 1

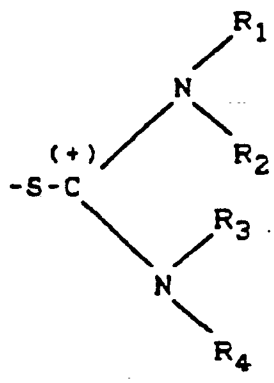

| Zeile | $R_1$ | $R_2$ | $R_3$ | $R_4$ |
|---|---|---|---|---|
| 1 | H | H | H | H |
| 2 | H | Alkyl | H | H |
| 3 | H | " | Alkyl | H |
| 4 | Alkyl | " | H | H |
| 5 | " | " | Alkyl | H |
| 6 | " | " | " | Alkyl |
| 7 | H | Allyl | H | H |
| 8 | H | " | Allyl | H |
| 9 | H | Cycloalkyl | H | H |
| 10 | H | Aryl | H | H |
| 11 | H | " | Aryl | H |
| 12 | H | Furfuryl | H | H |
| 13 | H | 2-Thiazoyl | H | H |

| Zeile | $R_1$ | $R_2$ | $R_3$ | $R_4$ |
|---|---|---|---|---|
| 14 | H | Alkylen | | H |
| 15 | $R_5$ | o-Arylen | | $R_5$ |
| 16 | Alkyl | $-CR_6=CR_7$ | | Alkyl |
| 17 | $R_5$ | $-CR_6=N-$ | | $R_5$ |
| 18 | $R_5$ | $-CR_6R_7-CO-$ | | $R_5$ |
| 19 | H | $-CH_2-NR_8-CH_2-$ | | H |
| 20 | $R_5$ | $-CO-CR_6R_7-CO-$ | | $R_5$ |
| 21 | $R_5$ | $-CR_6=CR_7-CO-$ | | $R_5$ |
| 22 | Alkylen | | $R_6$ | H |
| 23 | $-(CH_2)_2-O-(CH_2)_2-$ | | $R_6$ | H |
| 24 | $-(CH_2)_2-NR_5-(CH_2)_2-$ | | $R_6$ | H |
| 25 | H | $-NR_8R_9$ | $R_5$ | H |
| 26 | H | $-NR_8R_9$ | $-NR_8R_9$ | H |

worin

$R_5$ Wasserstoff oder Alkyl und

$R_6$—$R_9$ Wasserstoff, Alkyl, Cycloalkyl, Alkenyl, Aryl oder Aralkyl bedeuten, oder

$R_6$ und $R_7$ und/oder $R_8$ und $R_9$ einen Ring bilden.

Die bevorzugten Bedeutungen für Alkyl, Cycloalkyl, Alkenyl, Aryl und Aralkyl in Tabelle 1 entsprechen den vorstehend genannten bevorzugten Bedeutungen. Bevorzugtes Alkylen sind Ethylen, 1,2- und 1,3-Propylen. Bevorzugtes o-Arylen ist o-Phenylen.

$R_6$ und $R_7$ können z.B. zur Bildung eines 5- oder 6-Ringes gemeinsam eine Tri-, Tetra- oder Pentamethylen-Brücke bilden, $R_8$ und $R_9$ können zusammen mit dem N-Atom z.B. einen Pyrrolidin-, Piperidin-, Piperazin- oder Morpholin-Ring bilden.

Als Anionen $A^{(-)}$ kommen alle die für kationische Farbstoffe üblichen organischen und anorganischen Anionen in Betracht. Bevorzugt sind farblose Anionen.

Das Anion ist im allgemeinen durch das Herstellungsverfahren und die eventuell vorgenommene Reinigung der Ausgangsstoffe gegeben. Die Anionen können aber auch in bekannter Weise gegen andere Anionen ausgetauscht werden. Als Beispiele für $A^{(-)}$ seien genannt: Halogenide wie Chlorid, Bromid und Jodid. Sulfat, Hydrogensulfat, Methylsulfat, Ethylsulfat, Amidosulfat, Perchlorat, Phosphat, Hydroxid, Formiat, Acetat, Propionat, Oxalat, Malonat, Succinat, Maleinat, Chloracetat, Trichloroacetat, Methoxyacetat, Ethoxyacetat, Lactat, Citrat, Benzoat, Methansulfonat, Ethansulfonat, Benzolsulfonat, p-Toluolsulfonat, Carbonat, Tetrachlorzinkat und Tetrafluoroborat.

Mit Ausnahme des Falles $R_1$—$R_4$ $\neq$ H können die in Tabelle 1 in der kationischen Form II exemplifizierten Reste Z auch auch in der Neutralform (III) vorliegen, wobei auch Gemische beider Formen in einer Verbindung der Formel (I) vorkommen können.

Von den Farbstoffen der Formel (I) sind die der Formel

$$F' \left[ \begin{array}{l} (CH_2-NH-CO-Alkylen-Z')_{n'} \\ Y'_{m'} \end{array} \right. \qquad (IV)$$

für das Färben von Cellulosefasern, insbesondere Papier besonders geeignet, worin

F' für einen organischen Chromophor mit mindestens 4 carbo- und/oder heterocyclischen Fünf- und/oder Sechsringen steht, dessen Ringe kondensiert sein können und durch die vorstehend für Chromophore genannter Reste substituiert sein können,

Z' die Reste

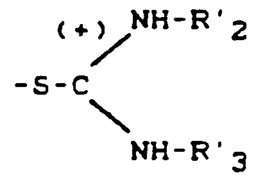

$A^{(-)}$ oder

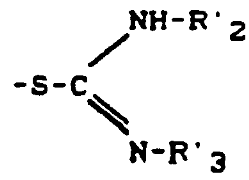

$R'_2$ und $R'_3$ Wasserstoff, $C_1$—$C_4$-Alkyl, $C_2$—$C_4$-Alkenyl, Cyclohexyl, Phenyl oder Tolyl oder
$R'_2$ und $R'_3$ zusammen Ethylen, Trimethylen, Vinylen oder o-Phenylen,
$A^{(-)}$ ein Anion,
Y' eine Sulfonsäure- oder Sulfonatgruppe,
m' 0—1 und
n' 1—5 bedeuten, und

die Anzahl der Sulfonsäuregruppen kleiner ist als die Anzahl der quartären und der quarternierbaren Aminogruppen.

Als bevorzugte Vertreter der organischen Chromophore F' seien genannt;

Aus der Gruppe der polycyclischen Carbonylfarbstoffe Indanthron-, Flavanthron-, Anthanthron-, Pyranthron-, Dibenzylpyrenchinon-, Isodibenzpyrenchinon-, Violanthron-, Isoviolanthron-, Benzanthron- und Thiophenbenzanthronfarbstoffe, Anthrimidcarbazole, Phthaloylacridone und stickstoffhaltige Derivate der Tetracarbonsäuren des Naphthalins, des 1,1'-Bisnaphthyls und des Perylens, Isoviolanthron, Violanthron und die $C_1$- und $C_2$-Alkyl- und Alkylenether seines 16,17-Dihydroxyderivats;

cis- und trans-Naphthoylenbenzimidazol, 5,5'-Bisnaphthyl-1,1',8,8'-tetracarbonsäuredibenzimidazol und sein 6'',6'''-Dimethylderivat, N,N'-Diarylimide der Perylentetracarbonsaure, in denen Aryl für Phenyl, p-Tolyl, p-Phenmethoxy oder p-Phenethoxy steht;

4,4'-Dibenzanthronyl und die Verbindungen

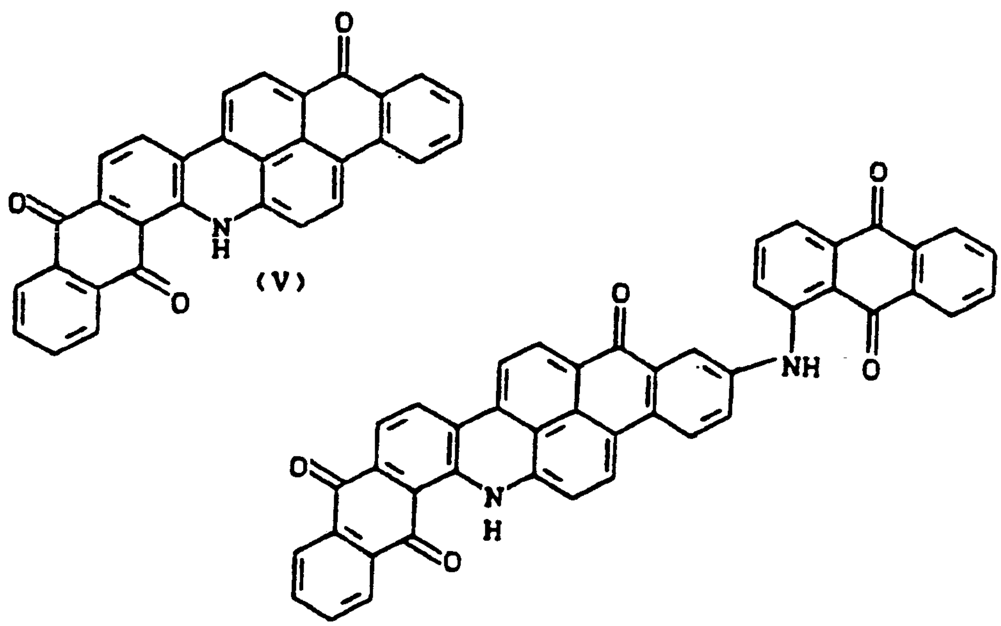

(V)

(VI)

besonders hervorgehoben seien;

von den Phthalocyaninen seien vorzugsweise die unsubstituierten Grundkörper mit Kupfer oder Nickel als Zentralatom, von den Indigoiden Indigo und Thioindigo, von den Xanthenfarbstoffen die der Formel

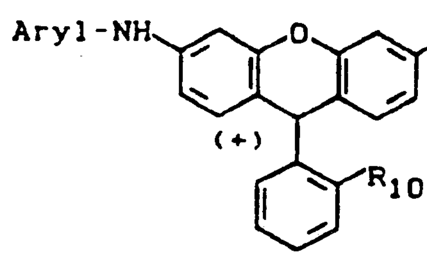

(VII)

mit $R_{10}$ = H, Cl, Br, $COO^{\ominus}$ und $SO_3^{\ominus}$, deren positive Ladung gegebenenfalls durch ein externes Anion $A^{(-)}$ mit der zuvorgenannten Bedeutung kompensiert wird;
aus der Reihe der Azinfarbstoffe
Dithiazinfarbstoffe wie

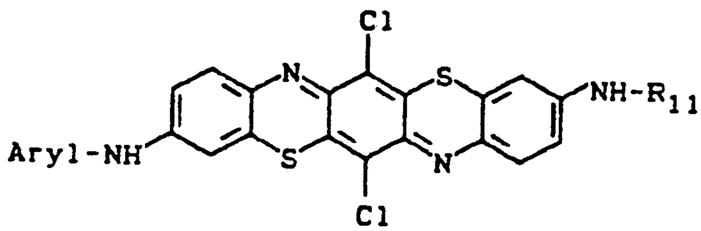

(VIII)

mit $R_{11}$ = H, Aryl,
sowie vor allem
Dioxazinfarbstoffe der weiter unten angeführten Formel (XVII) genannt.

Die Farbstoffe (VII) und (VIII) können weitere Substituenten tragen wie sie Seite 3 definiert sind. Dabei sind solche Verbindungen bevorzugt, deren Arylreste für Phenyl oder alkyl- oder alkoxysubstituiertes Phenyl stehen;

aus der Gruppe der Chinophthalonfarbstoffe die der Formel

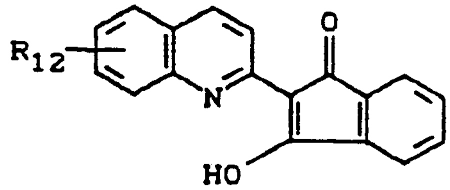

(IX)

wobei $R_{12}$ einem ankondensierten Benzolring oder einem Rest

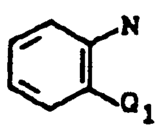

oder

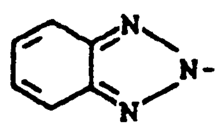

mit $Q_1$ = NH, N-Alkyl, O, S entspricht;
Hervorgehoben seien von diesen die Verbindungen

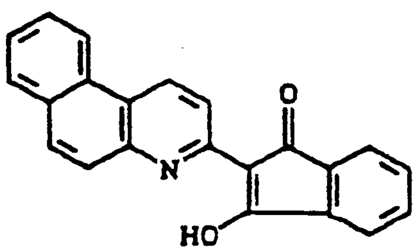

(X)

und

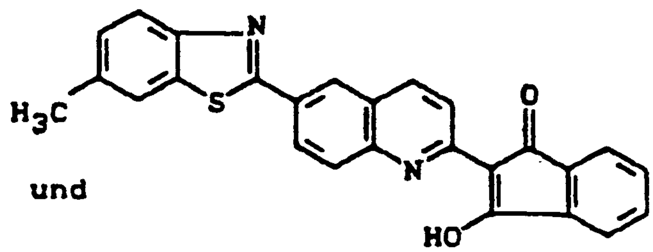

(XI)

und ferner solche Verbindungen der Formel (IX), bei denen der Benzolring ihres Indandion-Teils arylsubstituiert, besonders phenylsubstituiert ist;

aus dem Bereich der Azofarbstoffe Mono- und Bisazofarbstoffe, die gegebenenfalls metalliert vorliegen können. Von inhen seien symmetrische Azofarbstoffe der Formel

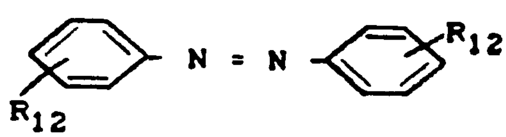

(XII)

wobei $R_{12}$ die vorgenannte Bedeutung besitzt, sowie vor allem Azofarbstoffe der weiter unten angeführten Formeln (XIX) und (XX) hervorgehoben;

aus der Gruppe der Triarylmethanfarbstoffe die der weiter unten genannten Formeln (XXI)-(XXIII).

In den bevorzugten Farbstoffen der Formel (IV) sind m = O und Alkylen = Methylen oder Ethylen.

Gegenstand der Erfindung sind auch basische Farbstoffe der Formel

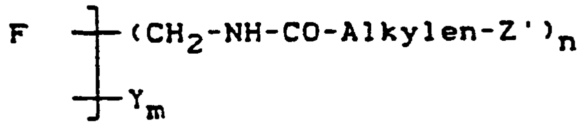

(XIII)

worin

F, Y, m und n die unter Formel (I) und Z′ die unter Formel (IV) angegebene Bedeutung besitzen, und $A^{(-)}$ für ein Anion vorgenannter Bedeutung steht.

Von den Farbstoffen der Formel (XIII) sind die der Formel

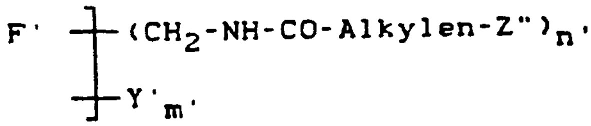

(XIV)

bevorzugt, worin

F′, Y′, m′ und n′ die unter Formel (IV) genannte Bedeutung haben, und

Z″ für Reste der Formeln

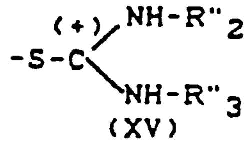 $A^{(-)}$ oder 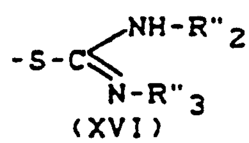

(XV) (XVI)

steht, worin

$R''_2$ und $R''_3$ Wasserstoff oder $C_2$—$C_3$-Alkylen, vorzugsweise Ethylen bedeuten.

In den besonders bevorzugten Farbstoffen der Formel (XIV) sind m′ = O und Alkylen = Methylen oder Ethylen.

Eine weiterer Gegenstand der Erfindung sind basische Dioxazinfarbstoffe der Formel

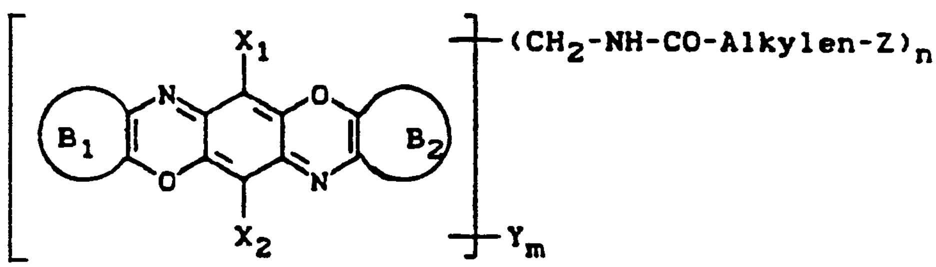

(XVII)

worin

$X_1$ und $X_2$ unabhängig voneinander Wasserstoff, Halogen, Alkyl, Cycloalkyl, Aryl, Alkoxy, Aryloxy, CN, $CONH_2$, CONH-Alkyl, $CON(Alkyl)_2$, CONH-Aryl, COO-Alkyl, NH—CO-Alkyl, NH-Aryl, NH—CO-Aryl oder NH—CO-Heteroaryl und

$B_1$ und $B_2$ unabhängig voneinander einen Benzolring oder ein ankondensiertes Ringsystem mit 2 bis 4 carbocyclischen und/oder heterocyclischen Ringen bedeuten,

Y, Z, m und n die unter Formel (I) angegebene Bedeutung besitzen,

und die cyclischen un acyclischen Reste und die Ringe $B_1$ und $B_2$ weitere Substituenten tragen können mit der Maßgabe, daß die Summe der anionischen Substituenten kleiner ist als die Summe der quartären und quaternierbaren Aminogruppen.

Die Farbstoffe (XVII) färben Papier in klaren roten bis blauen Tönen.

Die Ringsysteme $B_1$ und $B_2$ bestehen vorzugsweise aus Benzolringen kondensierten aromatischen 5- und 6-gliedrigen Ringen, die Heteroatome wie O, N, S enthalten können. Als Beispiele seien genannt (die Stelle × gibt die Bindung zum Sauerstoff und die Stelle y die Bindung zum Stickstoff an):

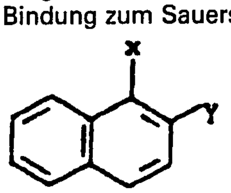 , 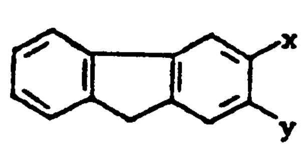 ,

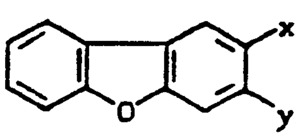 , 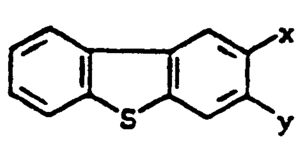 ,

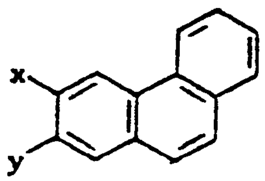 , 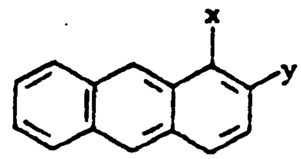 ,

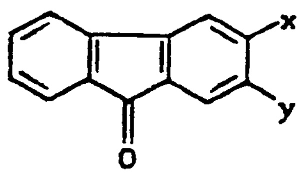 , 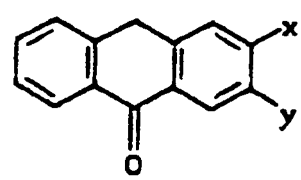 ,

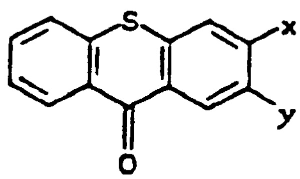 , 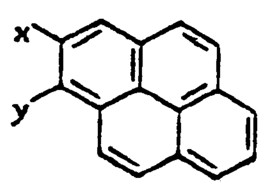

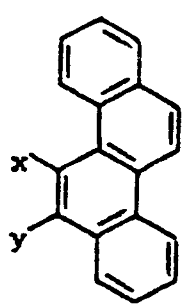 , 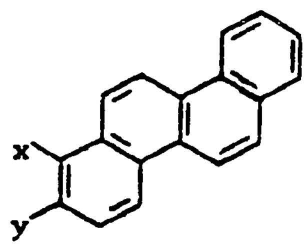 , 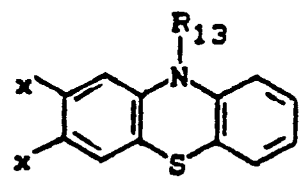

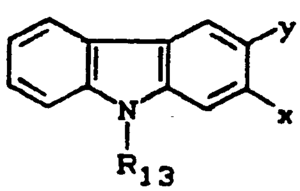 , 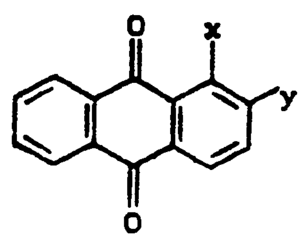

mit $R_{13}$ = Wasserstoff, $C_1$—$C_4$-Alkyl, $C_1$—$C_4$-Alkylcarbonyl oder -sulfonyl, Benzoyl, Phenyl oder Benzyl.

Diese Ringsysteme können außer den in Formel (I) definierten Substituenten weitere Reste, insbesondere die vorstehend als bevorzugt bezeichneten Substituenten tragen.

Von den Dioxazinfarbstoffen der Formel (XVII) sind die der Formel

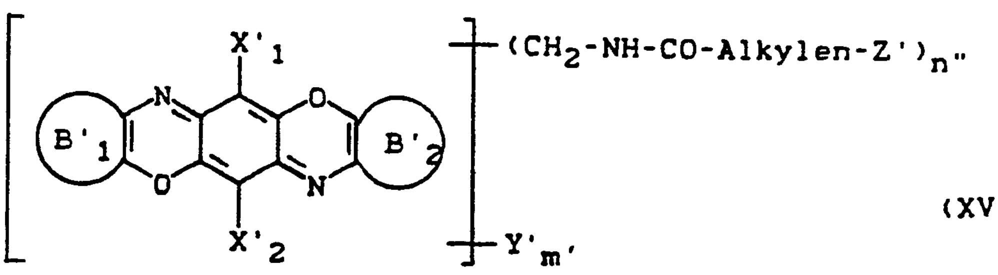

(XVIII)

worin

X'₁ und X'₂ unabhängig voneinander Wasserstoff oder Halogen,

B'₁ und B'₂ unabhängig voneinander eine Gruppe aus der Reihe Benzol, Naphthalin, Fluoren,

Phenothiazin, Diphenylensulfid, Phenanthren, Anthracen, Fluorenon, Carbazol oder Anthrachinon und
$n''$ 2-5 bedeuten, und
Y′, Z′ und m′ die unter Formel (IV) angegebene Bedeutung besitzen, bevorzugt.

In den bevorzugten Farbstoffen der Formel (XVIII) sind $B'_1$ und $B'_2$ bzw. $X'_1$ und $X'_2$ gleich.

Von diesen Dioxazinen sind wiederum diejenigen mit $X'_1 = X'_2$ = Chlor,
m′ = O und
Alkylen = Methylen oder Ethylen
hervorzuheben.

Von diesen Farbstoffen sind die mit $B'_1 = B'_2$ = o-Phenylen, das ein- oder zweifach substituiert sein kann, durch Cl, Aryl, Benzyl, Alkoxy, Aryloxy, NH—CO-Alkyl und NH—CO-Aryl, bei denen Alkyl und Aryl bevorzugt die zuvor hervorgehobenen Bedeutungen besitzen, und die mit

$B'_1 = B'_2 =$ 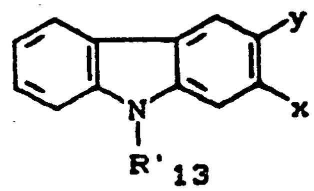 ,

wobei
$R'_{13}$ für Wasserstoff, $C_1$—$C_4$-Alkyl, bes. Ethyl, $C_1$—$C_4$-Alkylcarbonyl oder -sulfonyl oder Benzyl steht, besonders hervorzuheben.

Gegenstand der Erfindung sind auch basische Azofarbstoffe der Formel

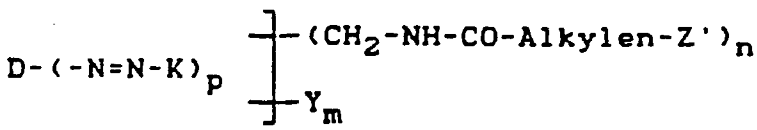 (XIX)

worin
D den Rest einer Diazokomponente,
K den Rest einer Kupplungskomponente und
p 1 oder 2 bedeuten, und
Y, m und n die unter Formel (I) und
Z′ die unter Formel (IV) angegebene Bedeutung besitzten und
die Diazo- und Kupplungskomponenten können weitere Substituenten tragen mit der Maßgabe, daß die Summe der anionischen Substituenten kleiner ist als die Summe der quartären un quaternierbaren Aminogruppen.

In Formel (XIX) stehen insbesonders
D für Reste von Diazokomponenten aus der Reihe Benzol, Naphthalin, Thiazol, Benzthiazol, Benzisothiazol, Thiadiazol, Benztriazol, Fluoren, Carbazol, Dibenzofuran oder Dibenzothiophen und
K für den Rest einer Kupplungskomponente aus der Reihe Benzol, Naphthalin, Pyrazol, Pyridin, Chinolin, Pyrimididin sowie für die Reste von Acylessigsäure- oder Malonsäurederivaten.

Die Farbstoffe (XIX) färben Papier in klaren gelben bis violetten Tönen.

Von den Azofarbstoffen der Formel (XIX) sind die der Formel

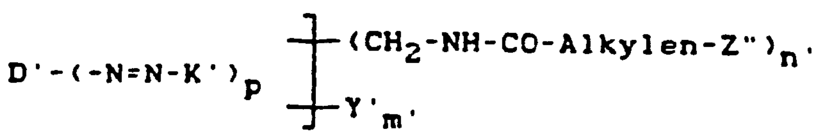 (XX)

bevorzugt, worin
D′ einen Rest der Formeln

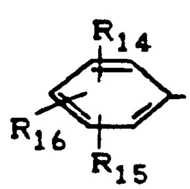 , 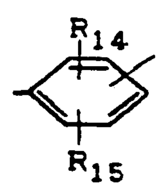 , 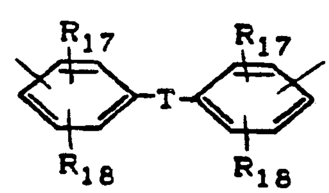 oder 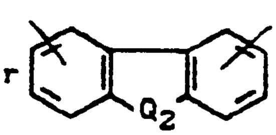

bedeutet, worin
$R_{14}$ und $R_{15}$ unabhängig voneinander für Waserstoff, Alkyl, Alkoxy, Fluor, Chlor, Brom oder NH—Ac,

Ac für Alkyl-carbonyl, -sulfonyl oder -carbamyl-, Benzoyl, Toluoyl, Phenyl-, oder Tolylsulfonyl oder -carbamoyl oder gegebenenfalls substituiertes triazinyl,

$R_{16}$ für Wasserstoff, Alkyl, Alkoxy, Chlor, Brom, NH-Ac oder einen rest der Formeln

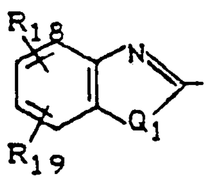

,

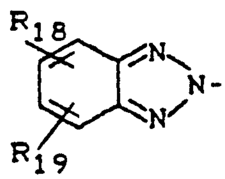

oder

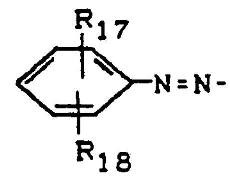

$T_{17}$, $R_{18}$ und $R_{19}$ unabhängig voneinander für Wasserstoff, Alkyl, Alkoxy, Chlor oder Brom,

$R_{19}$ zusätzlich für eine freie Valenz,

$Q_1$ wie vorgenannt für NH, N-Alkyl, O oder S,

$Q_2$ für $CH_2$, $R'_{13}N$, O oder S,

$R'_{13}$ wie vorgenannt für Wasserstoff, Alkyl, Alkylcarbonyl oder -sulfonyl oder Benzoyl,

T für direkte Bindung oder Brückenglied,

K für einen Rest der Formeln

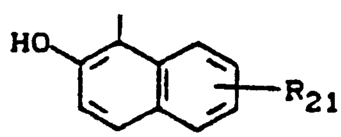

mit $R_{21}$ = H, Halogen wie Chlor oder Brom, OH, Alkyl, Alkoxy, Alkylamino, Phenylamino, Acylamino, $SO_2NH_2$, $SO_2NH$-Alkyl, $SO_2N(Alkyl)_2$;

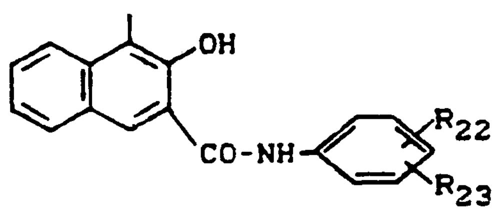

mit

$R_{22}$ = H, Halogen wie Chlor oder Brom, Alkyl, Alkoxy, Phenoxy, Acylamino, $SO_2NH_2$, $SO_2$—NH—Alkyl, $SO_2$-N(Alkyl)$_2$, $NO_2$, CN und

$R_{23}$ = H, Halogen wie Chlor oder Brom, Alkyl, Alkoxy:

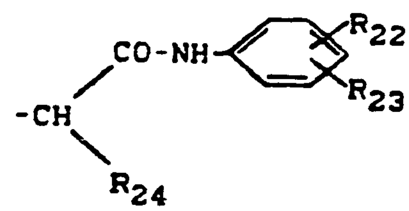

mit

$R_{22}$ und $R_{23}$ in vorgenannter Bedeutung und

$R_{24}$ = $COCH_3$, CO-Phenyl, COO-Alkyl, $CONH_2$ oder CN;

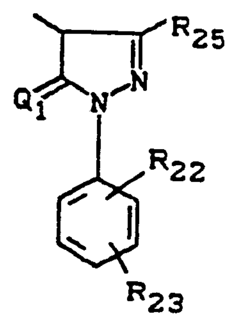

mit

$R_{25} = CH_3, COOCH_3, COOC_2H_5$ und

$Q_1$, $R_{22}$ und $R_{25}$ in vorgenannter Bedeutung;

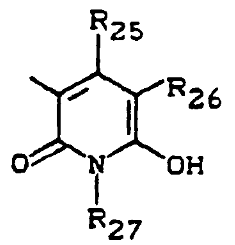

mit

$R_{26}$ = H, Halogen wie Chlor oder Brom, COO-Alkyl, $CONH_2$, CN,

$R_{27}$ = H, Alkyl, Phenyl, Benzyl oder NH—$C_2$—$C_4$-Alkylen-G, wobei G Dialkylamino, 1-Piperidino, 1-Morpholino, 1-Piperazino, 1-Pyrrolidino, Hydroxy oder $C_1$—$C_4$-Alkoxy bedeutet,

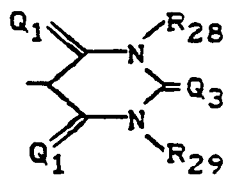 , 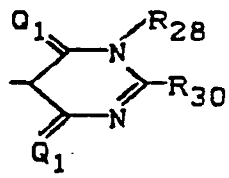 und 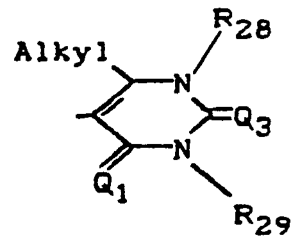

mit

$Q_1$ = unabhängig voneinander obengenannte Bedeutung,

$Q_3$ = O, S, NH, N—CN, N-Phenyl,

$R_{28}$, $R_{29}$ H, Alkyl, Phenylen-$R_{21}$,

$R_{30}$ = H, Alkyl, Phenylen-$R_{21}$, Alkylamino oder Dialkylamino,

Y', m' und n' die unter Formel (IV),

Z'' die unter Formel (XIV) und

P die unter Formel (XIX) genannte Bedeutung haben.

Als Brückenglieder kommen vorzugsweise in Betracht:

$C_1$—$C_4$-Alkylen, —CH=CH—, —O—, —S—, $>SO_2$, —NH—, $>$N-Alkyl,

—NH—NH—, —N=N—, $>$C=O, —CO—CO—, —NH—CO—, —O—CO—, —NH—$SO_2$—,

—O—$SO_2$—, —CO—NH-Phenylen-NH—CO, —S—S—,

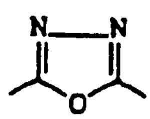 , Isopropyliden, Cyclohexyliden,

—O—$T_1$—O— mit $T_1$ = $>$C=O, $C_2$—$C_6$-Alkylen, 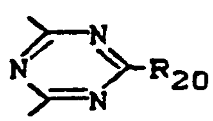 ,

worin $R_{20}$ z.B. für F, Cl, $NH_2$, Alkyl, Alkoxy, Phenyl, oder eine Gruppe NH-$C_2$—$C_4$-Alkylen-G steht, in der G Dialkylamino, 1-Piperidino, 1-Morpholino, 1-Piperazino, 1-Pyrrolidino, Hydroxy oder $C_1$—$C_4$-Alkoxy bedeutet,

—NH—$T_2$—NH— worin $T_2$ für $T_1$ und zusätzlich für

$>$C=S, —CO—$CH_2$—$CH_2$—CO—, —CO—CH=CH—CO—, oder —CO-Phenylen—CO— steht,

Von den Farbstoffen der Formel (XX) sind diejenigen bevorzugt, in denen

m' = O

Alkylen = Methylen oder Ethylen und in deren Azochromophor D'—(—N=N—K')$_p$ Alkyl für $C_1$—$C_4$-Alkyl, vorzugsweise Methyl oder Ethyl und Alkoxy für $C_1$—$C_4$-Alkoxy stehen.

Gegenstand der Erfindung sind auch basische Triarylmethanfarbstoffe der Formel

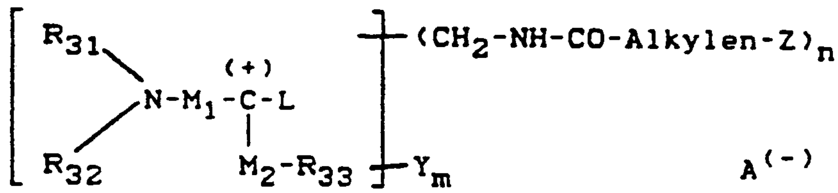

(XXI)

worin

$M_1$ p-Phenylen, gegebenenfalls substituiert, mit Alkyl oder Halogen,

$M_2$ p-Phenylen, gegebenenfalls substituiert mit Alkyl, Alkoxy oder Halogen,

$R_{31}$ H, Alkyl, Cycloalkyl, Aryl, Heteroaryl oder Aralkyl und

$R_{32}$ H, Alkyl oder Aralkyl bedeuten, und

$R_{31}$ und $R_{32}$ gegebenenfalls unter Einschluß eines weiteren Heteroatoms aus der Gruppe O, S, NH, N-Alkyl zu einem gesättigten oder der Rest $R_{32}$ mit dem o-ständigen C-Atom von $M_1$ zu einem teilgesättigten, heterocyclischen Ring geschlossen sein können,

$R_{33}$ H, Halogen, Alkyl, Alkoxy oder $NR_{31}R_{32}$,

L einen aromatischen Rest der nachfolgenden Bedeutung;

p-Phenylen-$R_{34}$, gegebenenfalls substituiert mit Alkyl oder Halogen,

1,4-Naphthylen-$R_{34}$, gegebenenfalls substituiert mit Alkyl oder Halogen mit

$R_{34}$ = H, Alkyl, Alkoxy, Aryloxy oder $NR_{31}R_{32}$,

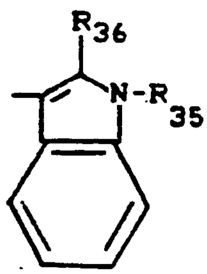

mit

$R_{35}$ = H, Alkyl,

$R_{36}$ = H, Alkyl, gegebenenfalls durch Alkyl, Alkoxy oder Halogen substituiertes Phenyl, COOAlkyl, $COONH_2$

$A^{(-)}$ ein Anion für den Fall, daß die Ladung des Chromophors nicht durch den Rest Y komponsiert wird, bedeuten und

Y, Z, m und n die unter Formel (I) angegebene Bedeutung haben.

Sie färben Papier in klaren roten, violetten, blauen beziehungsweise grünen Tönen.

In Formeln (XXI) stehen vorzugsweise Alkyl für $C_1$—$C_4$-Alkyl, gegebenenfalls substituiert durch Hydroxy, Acyloxy, $C_1$—$C_4$-Alkoxy, Halogen oder CN, Aryl für Phenol oder Naphthyl, gegebenenfalls substituiert durch die bei den Formeln (II) und (III) genannten Reste, Heteroaryl für einen aromatischen Rest mit einem fünf- oder sechsgliedrigen Heterocyclus, der N, O und/oder S als Heteratome enthalten kann und Halogen für Chlor und Brom.

Von den Triarylmethanfarbstoffen der Formel (XXI) sind die der Formel

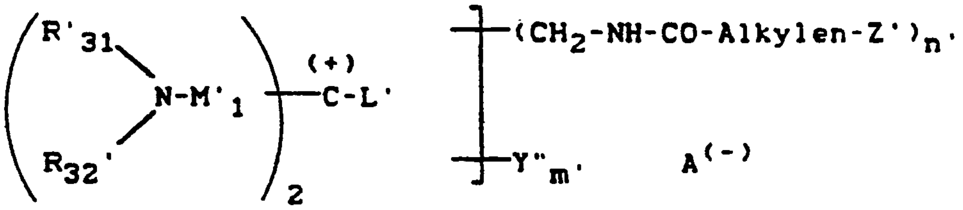

(XXII)

worin

$M'_1$ p-Phenylen, gegebenenfalls monosubstituiert mit Alkyl, Alkoxy oder Halogen,

$R'_{31}$ Benzyl, Aryl,

$R'_{32}$ H, Methyl, Ethyl, Benzyl,

L' einen aromatischen Rest der nachfolgenden Bedeutung;

p-Phenylen-$R'_{34}$, gegebenenfalls monosubstituiert mit $C_1$—$C_4$-Alkyl oder Halogen,

1,4-Naphthylen-$R'_{34}$ mit

$R'_{34}$ H, Alkyl, Alkoxy, $NR'_{31}$, $R'_{32}$

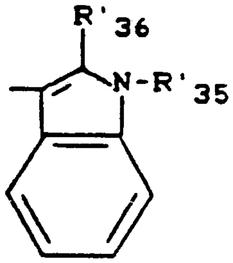

mit $R'_{35}$ = H, Methyl und
mit $R'_{36}$ = Methyl, Phenyl

Y'' eine Sulfonsäure-, Sulfonat-, Carbonsäure- oder Carbonatgruppe bedeuten und
Z', m' und n' das unter Formel (IV) Angegebene bedeuten bevorzugt,
In den bevorzugten Farbstoffen der Formel (XXII) stehen
Alkylen für Methylen oder Ethylen,
Aryl für Phenyl, gegebenenfalls substituiert mit Halogen, $C_1$—$C_4$-Alkyl, $C_1$—$C_4$-Alkoxy, Phenoxy oder Tolyloxy, für Naphthyl oder

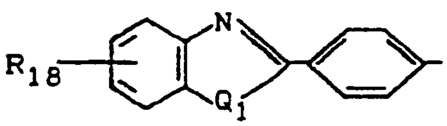 , 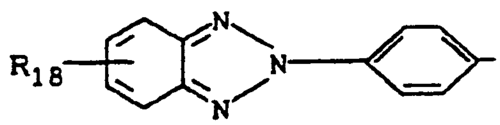

mit
$R_{18}$ wie vorgenannt H, $C_1$—$C_4$-Alkyl, $C_1$—$C_4$-Alkoxy, Chlor oder Brom und
$Q_1$ wie vorgenannt NH, N-Alkyl, o oder S.
Von den Farbstoffen der Formel (XXII) sind besonders die der Formel

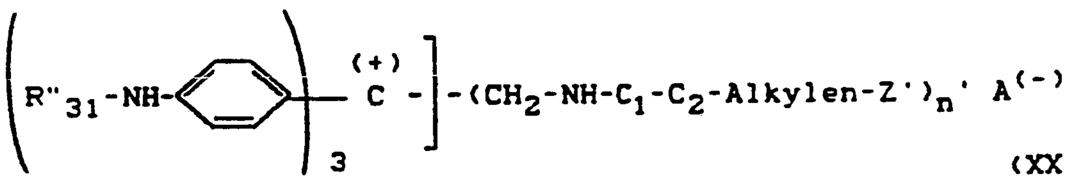

(XXIII)

bevorzugt mit
$R''_{31}$ = Aryl
wobei für Aryl insbesondere die vorstehend als bevorzugt bezeichneten Bedeutungen gelten.
Bevorzugte Farbstoffe sind ebenfalls basische Phthalocyaninfarbstoffe der Formel

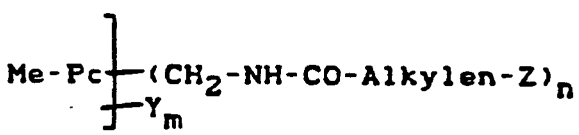

(XXIV)

worin
Pc den Rest eines Phthaloccyanin-Farbstoffs und
Me Cu oder Ni bedeuten,
T, Z, m und n die unter Formel (I) angegebenen Bedeutung, und vorzugsweise die unter Formel (IV) angegebene Bedeutung von Y', Z', m' und n' haben, und m kleiner ist als n,
Die Herstellung der Farbstoffe (I), (XIII), (XVII), (XIX), (XXI) und (XXIV) erfolgt beispielsweise durch Umsetzung entsprechender Chromophore mit dem Rest

$$—CH_2—NH—CO\text{-}Alkylen\text{-}Halogen \qquad (XXV)$$

mit einem Thioharnstoff der Formel

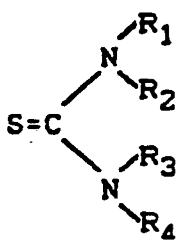

(XXVI)

bzw.

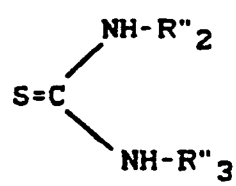

(XXVII)

Verbindungen mit dem Rest (XXV) sind im allgemeinen bekannt. Sie werden hergestellt durch Umsetzung des Farbstoffgrundkörpers in konzentrierter Schwefel-, Phosphor- oder Polyphosphorsäure entweder

a) mit einem N-Methylol-Amid der Formel

$$HO—CH_2—NH—CO\text{-Alkylen-Halogen} \quad (XXVIII)$$

vorzugsweise N-Methylolchloracetamid, oder

b) mit einer Mischung von Paraformaldehyd und einem Amid der Formel

$$NH_2—CO\text{-Alkylen-Halogen} \quad (XXIX)$$

vorzugsweise Chloracetamid oder β-Brompropionsäureamid.

Es können auch Ausgangsprodukte für die Farbstoffe — z.B. im Falle der Azofarbstoffe Diazo- oder Kupplungskomponente — zunächst mit den Verbindungen (XXVIII) oder (XXIX) umgesetzt werden. Nach beendeter Farbstoffsynthese wird dann abschließend mit den Thioharnstoffen (XXVI) bzw. (XXVII) umgesetzt.

Nach der Fertigstellung können die Reaktionslösungen der Farbstoffe entweder direkt zum Färben verwendet werden, oder die Farbstoffe werden durch Ausfällen, Aussalzen oder Neutral- bis Basischstellen der Lösung abgetrennt und getrocknet.

Die Farbstoffe (I), (XIII), (XVII), (XIX), (XXI) und (XXIV) können als gut wasserlösliche Verbindungen aus wäßrigsauer Lösung zum Färben von verschiedensten mit kationischer Farbstoffen anfärbbare Substrate wie Cellulosematerialien, Polyacrylnitril, sauer modifiziertem Polyamid und Polyester, Wolle und Leder Verwendung finden.

Hervorragend geeignet sind die Farbstoffe vor allem zum Färben von verschiedensten Papierarten in klaren Tönen.

Beim Färben werden hohe Ausziehgrade erreicht, erkenntlich and der geringen Abwasserbelastung mit Farbstoff. Die Färbungen weisen gute bis sehr gute Licht- und Naßechtheiten auf. Sie sind gegen Einwirkung von Wasser, Alkoholen, Seifen oder wäßrigen organischen Säuren sehr beständig.

In der US—PS 2127236 wird das Färben von Cellulosematerialien mit Farbstoffen des Typs

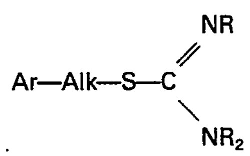

beschrieben, in der EP—A—0 061 624 gegebenenfalls sulfogruppenhaltige basische Farbstoffe mit einer Gruppierung

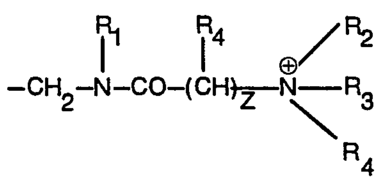

aus der Reihe der Chinophthalon-, Indigoid-, Xanthen- und höher annellierten Carbonylfarbstoffe sowie deren Verwendung zum Färben von Papier.

Beispiel 1

a) 236 g der Verbindung

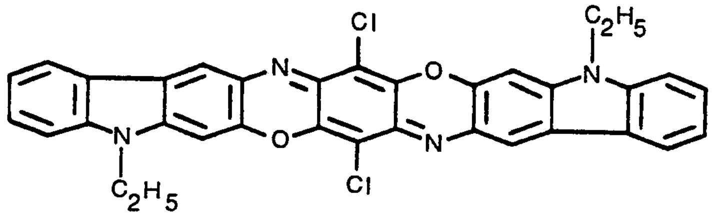

und 200 g N-Methylol-chloracetamid werden als Mischung in 1,1 l 90%ige Schwefelsäure bei 0—5°C eingetragen und 15 Stunden bei dieser Temperatur gerührt. Man gibt die Reaktionslösung auf Eis, saugt ab, wäscht mit Wasser neutral und trocknet. Man erhält 394 g der Verbindung

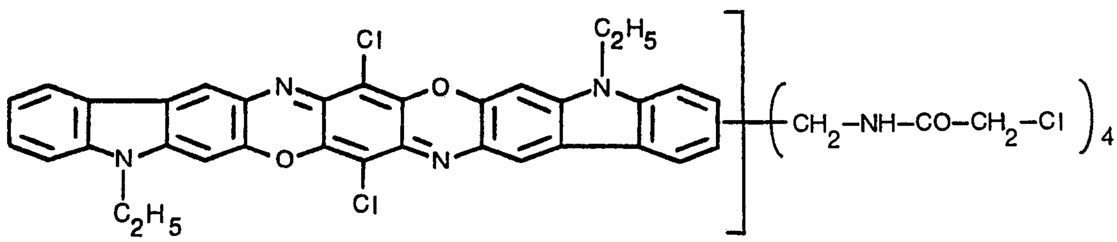

b) 50 g dieser Verbindung werden in einer siedenden Mischung von 500 ml Wasser und 65 g Eisessig mit 30 g Thioharnstoff innerhalb 1 Stunde zur Reaktion gebracht. Man erhält eine tiefblaue Lösung mit einem Gehalt von ca. 10% der Verbindung

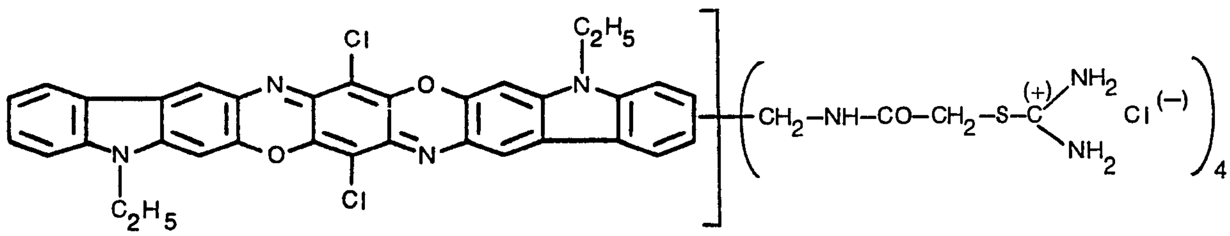

Nach dem Erkalten kann die Lösung direkt auf Papier ausgeführt werden. Bei sehr gutem Ausziehvermögen erhält man blaue Färbungen mit sehr guter Lichtechtheit und ausgezeichneten Naßechtheiten.

$\lambda_{max}$ nm in Methanol.

IR (KBr): 1630, 1545, 1335, 1110 $cm^{-1}$.

Statt der angegebenen Essigsäure lassen sich genau so gut andere Säuren verwenden, genannt seien hier beispielsweise Ameisen-, Milch- und Methansulfonsäure.

Setzt man 50 g der Verbindung aus Beispiel 1a mit Thioharnstoffen der allgemeinen Formel (XXIV) um, erhält man auf analoge Art wie im Beispiel 1b Lösungen der entsprechenden Isothiuroniumsalze der allgemeinen Formel

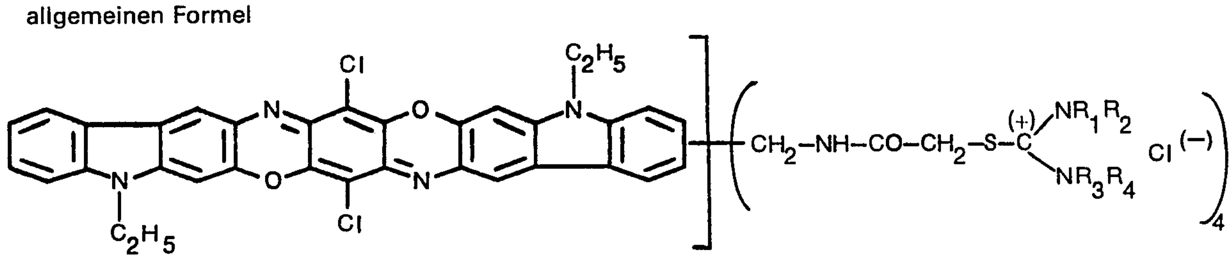

für die Beispiele zusammen mit der einzusetzenden Menge des zugehörigen Thioharnstoffs in Tabelle 1 aufgeführt sind.

**Tabelle 1**

| Beispiel | Menge des entspr. Thioharnstoffs in g | $R_1$ | $R_2$ | $R_3$ | $R_4$ | $\lambda_{max}$ [nm] in Methanol |
|---|---|---|---|---|---|---|
| 2 | 36 | H | $CH_3$ | H | H | 585 |
| 3 | 41 | H | $CH_3$ | $CH_3$ | H | 587 |
| 4 | 74 | H | n-$C_4H_9$ | n-$C_4H_9$ | H | 582 |
| 5 | 45 | H | Allyl | H | H | 585 |
| 6 | 60 | H | Phenyl | H | H | 585 |
| 7 | 40 | H | $-CH_2-CH_2-$ | | H | 587 |
| 8 | 45 | H | $-CH_2-CH_2-CH_2-$ | | H | 584 |

Mit den Lösungen der vorgenannten Verbindungen erhält man Färbungen, die in Farbton und Echtheiten der von Beispiel 1b entsprechen.

Beispiel 9

a) Trägt man 236 g der Verbindung

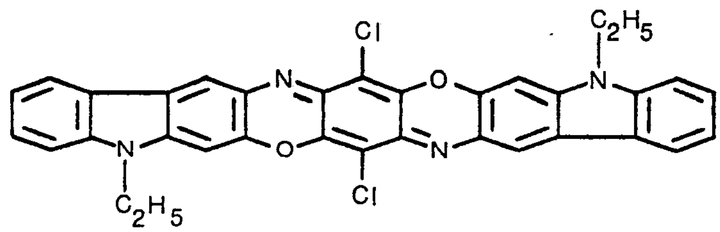

und 100 g N-Methylol-chloracetamid als Mischung in 1,1 l Schwefelsäure bei 0—5°C ein und verfährt ansonsten wie in Beispiel 1a, erhält man 315 g der Verbindung

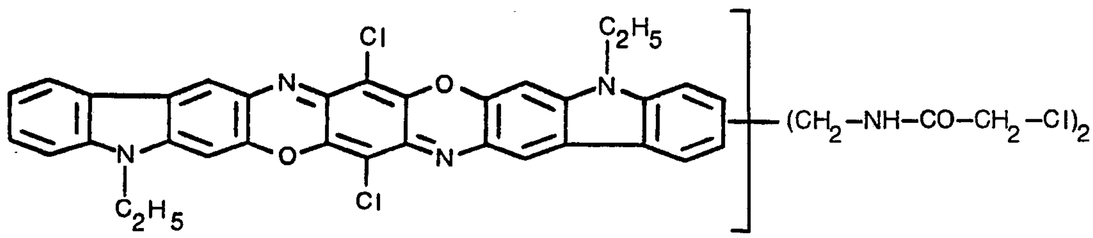

b) 78 g dieser Verbindung werden in einer siedenden Mischung von 800 ml Wasser und 23 g Methansulfonsäure mit 20 g Thioharnstoff innerhalb einer Stunde umgesetzt. Man erhält eine tiefblaue Lösung mit einem Gehalt von ca. 10% der Verbindung

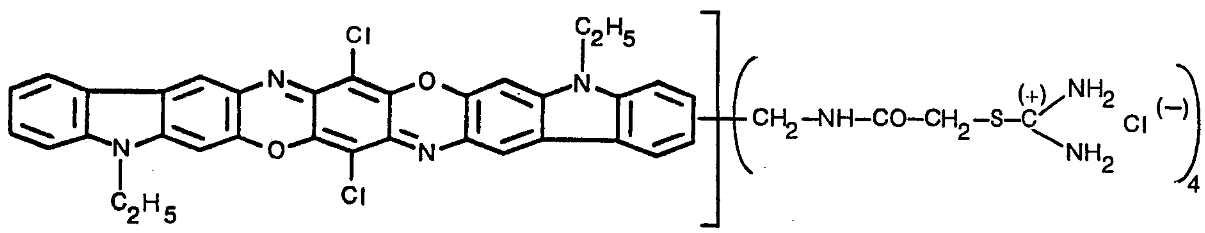

Nach dem Erkalten kann die Lösung direkt auf Papier ausgefärbt werden. Bei sehr gutem Ausziehvermögen erhält man violette Färbungen mit sehr guter Lichtechtheit und ausgezeichneten Naßechtheiten.

$\lambda_{max}$ in Methanol 586 nm.

Bringt man 78 g der Verbindung aus Beispiel 9a mit den jeweils in Menge und Substitutionsmuster in Tabelle 1 angezeigten Thioharnstoffen der Formel (XXV) zur Reaktion, erhält man auf analoge Weise die entsprechenden Verbindungen der allgemeinen Formel

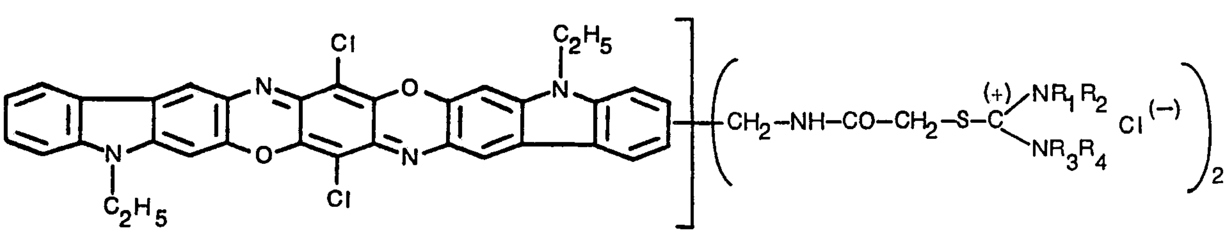

Sie zeigen des gleiche Eigenschaftsbild wie die vorgenannte Verbindung.

Beispiel 10

a) 236 g der Verbindung

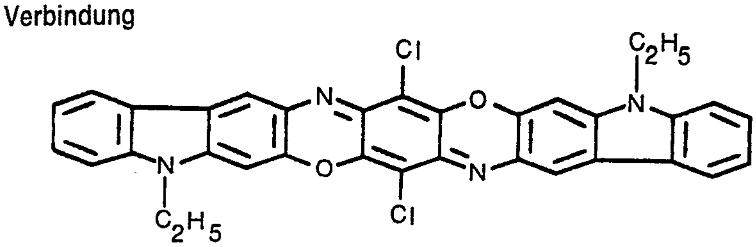

und 150 g N-Methylol-chloracetamid werden als Mischung in 1,1 l 90%ige Schwefelsäure bei 0—5°C eingetragen und 15 Stunden bei dieser Temperatur gerührt. Man gibt die Reaktionslösung auf Eis, saugt ab, wäscht mit Wasser neutral und trocknet. Man erhält 394 g der Verbindung

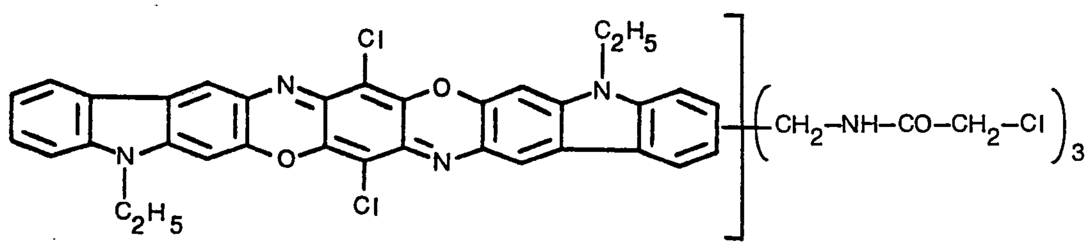

b) 100 g dieser Verbindung werden in einer siedenden Mischung von 980 ml Wasser und 120 ml Eisessig mit 50 g Thioharnstoff innerhalb 1 Stunde zur Reaktion gebracht. Man erhält eine tiefblaue Lösung mit einem Gehalt von ca. 10% der Verbindung

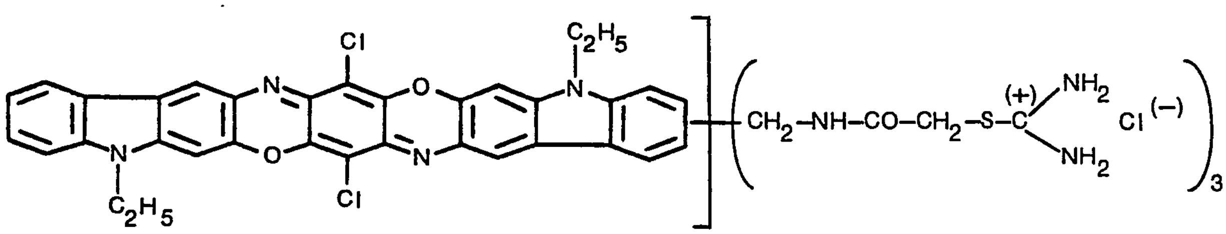

Nach dem Erkalten kann die Lösung direkt auf Papier ausgefärbt werden. Bei sehr gutem Ausziehvermögen erhält man blauviolette Färbungen mit sehr guter Lichtechtheit und ausgezeichneten Naßechtheiten.

$\lambda_{max}$ in Methanol 586 nm:

IR (KBr): 1635, 1545, 1335, 1115 $cm^{-1}$.

Setzt man die in der nachfolgenden Tabelle 2 aufgeführten Dioxazine in den dort angegebenen Mengen statt des in Beispiel 10a genannten Dioxazins mit 150 g N-Methylol-chloracetamid wie in diesem Beispiel beschrieben um, erhält man Verbindungen der allgemeinen Formel

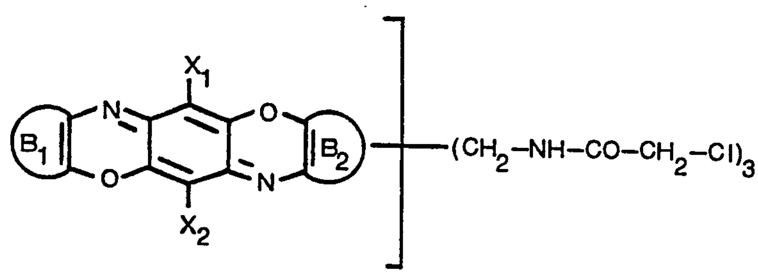

Bringt man jeweils 100 g der Verbindungen dieses Typs mit den tabellierten Mengen Thioharnstoff entsprechend dem in Beispiel 10b angeführten Verfarhen zur Reaktion, erhält man ca. 10%ige Lösungen von Farbstoffen der allgemeinen Formel

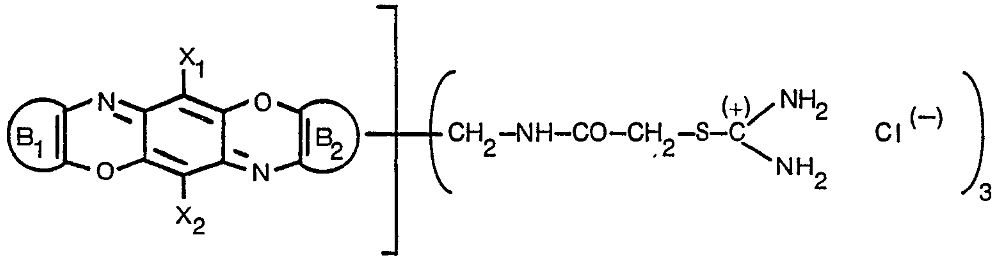

Die Farbnuancen auf Papier sind für diese Susbstanzen in Tabelle 2 aufgelistet.

TABELLE 2

| Beispiel | 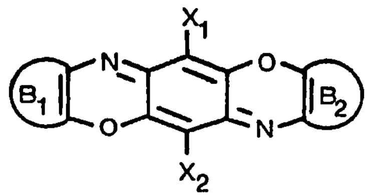 | Eingesetzte Menge in g Dioxazin | Thioharnstoff | Nuance auf Papier |
|---|---|---|---|---|
| 11 | 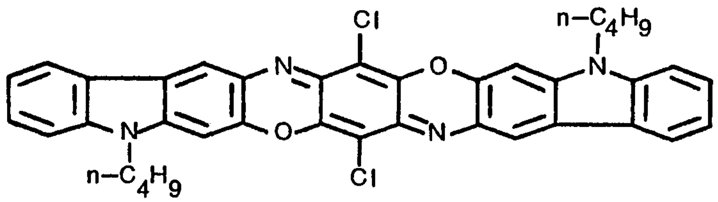 | 258 | 47 | blauviolett |
| 12 | 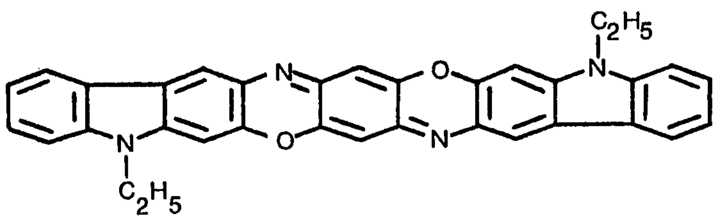 | 208 | 54 | violett |
| 13 | 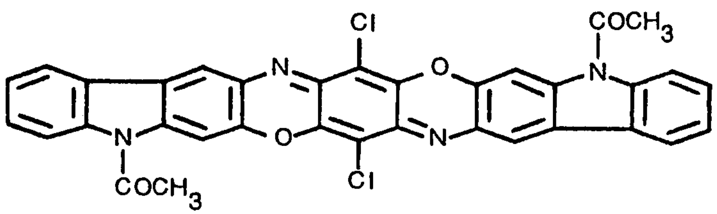 | 247 | 50 | rotviolett |
| 14 | 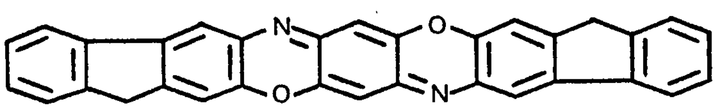 | 185 | 58 | rotviolett |

TABELLE 2 (Fortsetzung)

| Beispiel | 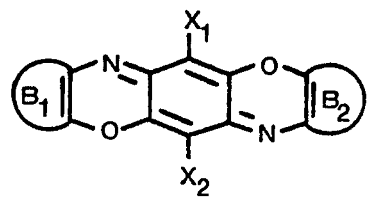 | Eingesetzte Menge in g Dioxazin | Thioharnstoff | Nuance auf Papier |
|---|---|---|---|---|
| 15 | 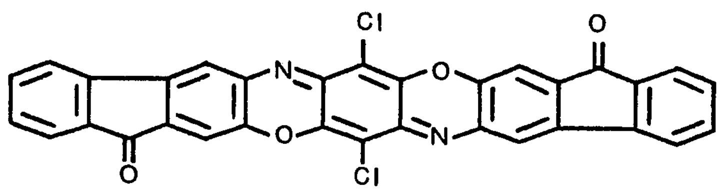 | 224 | 52 | rotviolett |
| 16 | 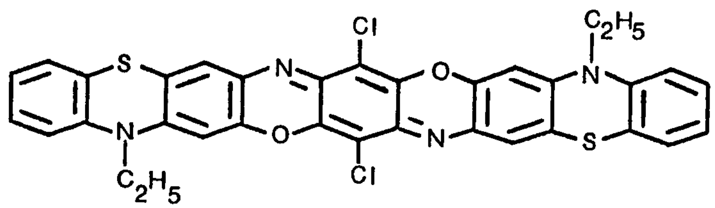 | 262 | 47 | rotstichig blau |
| 17 | 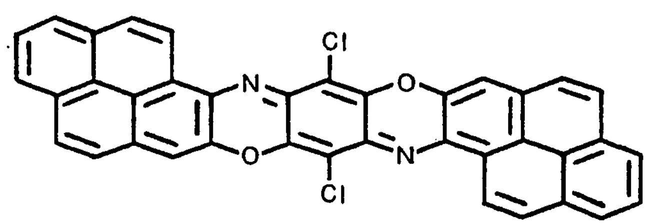 | 241 | 49 | blauviolett |

Beispiel 18

a) Trägt man eine Mischung von 208 g der Verbindung

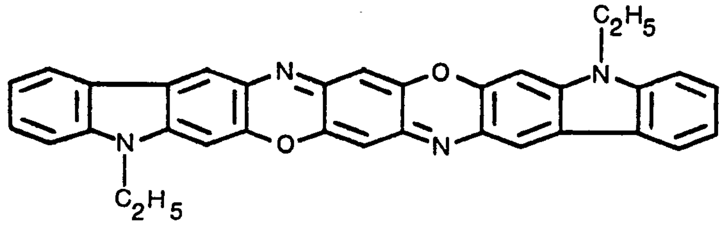

und 300 g N-Methylol-chloracetamid in 1,1 l 90%ige Schwefelsäure bei 0—5°C ein und verfährt im übrigen wie in Beispiel 1a, erhält man 351 g der Verbindung

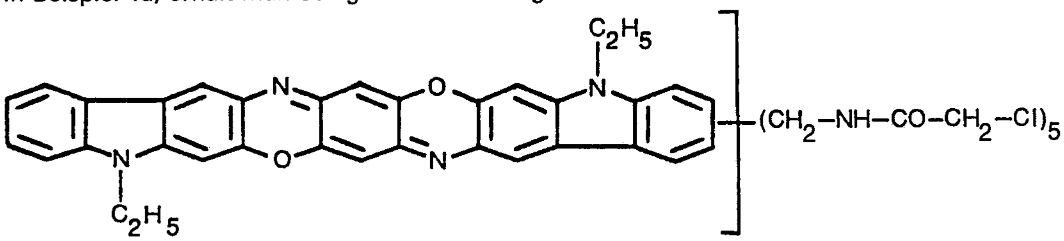

b) Setzt man 42 g dieser Verbindung in einer siedenden Mischung von 440 ml Wasser und 54 g Eisessig mit 20 g Thioharnstoff innerhalb 1 Stunde um, erhält man eine tiefblaue Lösung mit einem Gehalt von ca. 10% der Verbindung

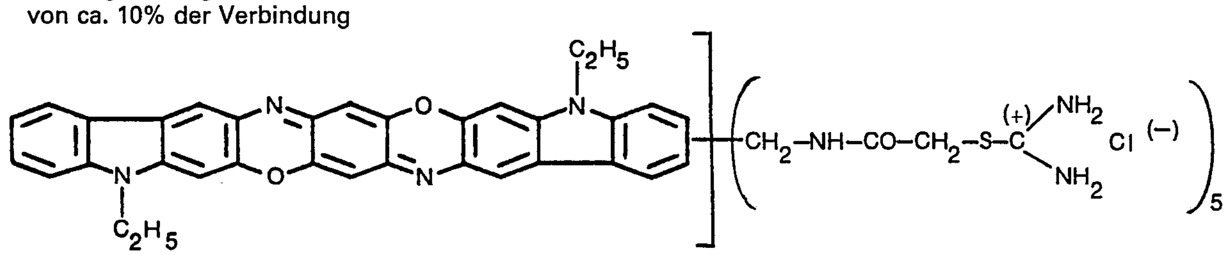

Sie entspricht der Verbindung aus Beispiel 1b in Farbnuance und Echtheiten.

$\lambda_{max}$ in Methanol 583 nm.

Bringt man 42 g der Verbindung aus Beispiel 18a mit den jeweils in Menge und Substitutionsmuster in Tabelle 1 angezeigten Thioharnstoffen der Formel (XXV) zur Reaktion, erhält man auf analoge Weise die entsprechenden Verbindungen der allgemeinen Formel

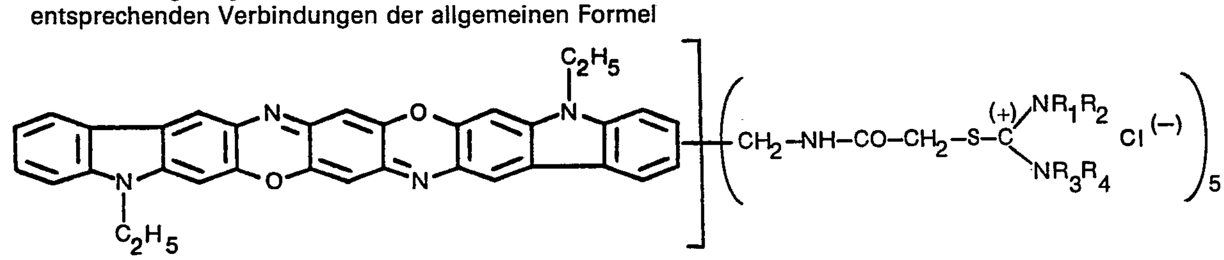

Sie zeigen das gleiche Eigenschaftsbild wie die vorgenannte Verbindung.

Beispiel 19

a) Eine Mischung von 48 g Paraformaldehyd und 204 g Bromessigsäureamid wird in 1,1 l 98%ige Schwefelsäure bei 0—5°C eingetragen. Die Mischung wird 30 Minuten bei 40°C gerührt, erneut auf 0—5°C gekühlt und 236 g der Verbindung

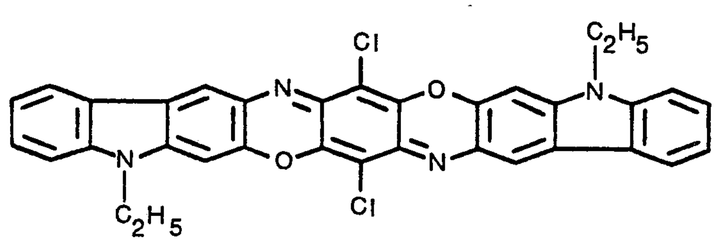

werden bei dieser Temperatur eingetragen. Man rührt 15 Stunden bei Raumtemperatur, arbeitet wie in Beispiel 1a auf und erhält so 421 g der nachstehenden Verbindung

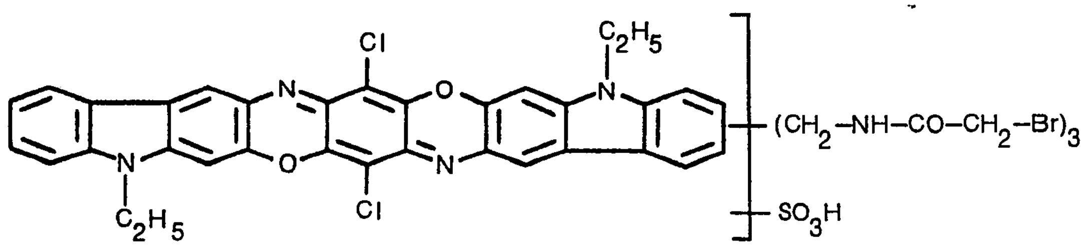

b) Setzt man 55 g dieser Verbindung mit 30 g 2-Mercaptobenzimidazol in 400 ml Nitrobenzol bei 170°C um und läßt nach 4 Stunden erkalten, erhält man nach Absaugenund Trocknen 73 g der Verbindung

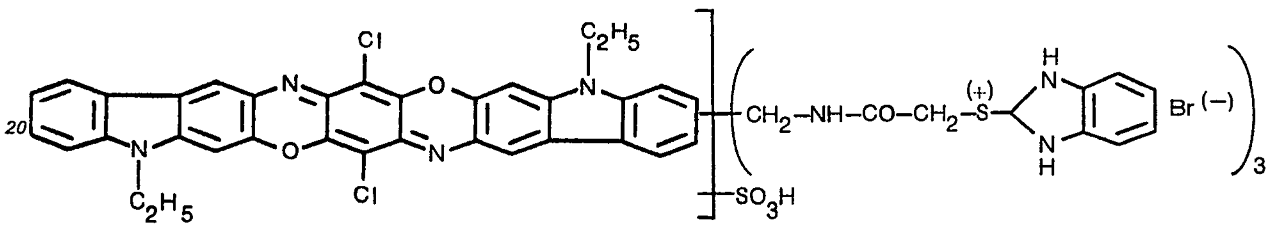

in 5%iger Milchsäure gelöst ergibt sie blau-violette Färbungen, die im Echtheitsniveau der Verbindung aus Beispiel 1b entsprechen.

Beispiel 20

Setzt man 55 g der Verbindung aus Beispiel 19a mit 46 g N,N'-Diphenylthioharnstoff wie in Beispiel 19b, um, erhält man 83 g der Verbindung

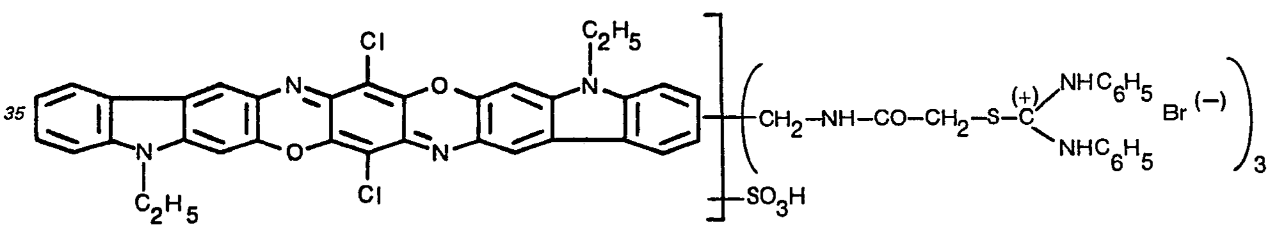

Sie gleicht der vorgenannten in ihren Eigenschaften.

Beispiel 20a

Setzt man 55 g der Verbindung aus Beispiel 19a mit 27 g N,N',N'',N'''-Tetramethylthioharnstoff in 400 ml Nitrobenzol bei 140°C um, erhält man analog zu Beispiel 19b 69 g der Verbindung

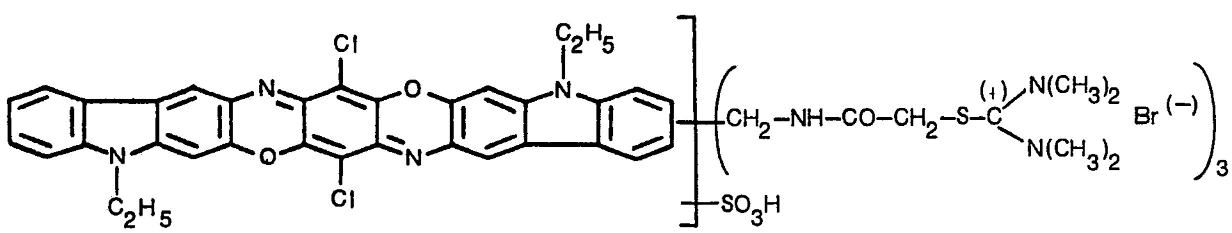

in 10%iger Essigsäure gelöst ergibt sie blaue Färbungen, die im Echtheitsniveau der Verbindung aus Beispiel 1b entsprechen.

Beispiel 21

a) 11,9 g (30,0 mmol) der Verbindung

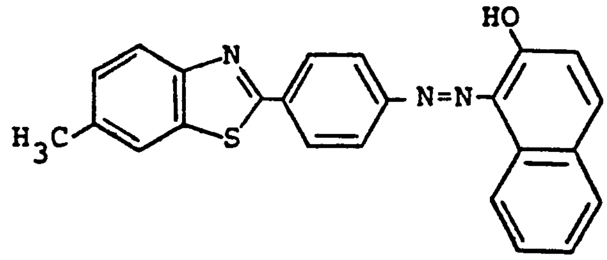

werden im Gemisch mit 14,3 g (116 mmol) N-Methylolchloracetamid in 60 ml 100%ige Schwefelsäure bei 0—5°C eingetragen. Man rührt 2 Stunden bei 0—5°C, über Nacht bei Raumptemperatur und zuletzt 2 Stunden bei 40—45°C. Man gibt den Ansatz auf 300 g Eis, saugt das ausgefallene Produkt ab und wäscht mit Wasser sulfatfrei und neutral. Nach Trocken bei 60°C erhält man in quantitativer Ausbeute 20,5 g der Verbindung

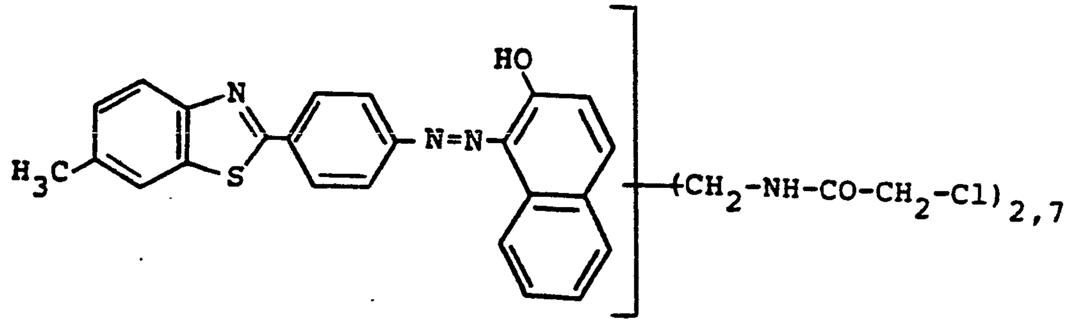

Cl: ber. 14,07%, gef. 14,1%.

b) 6,8 g der vorstehenden Verbindung (10,0 mmol) werden zusammen mit 3,1 g Thioharnstoff in einer Mischung von 70,2 ml Wasser und 8,9 g Eissessig 1 Stunde bei 95—100°C gehalten. Man erhält eine rote Lösung. Bei sehr gutem Ausziehvermögen erhält man auf Papier rote Färbungen mit guten Naßechtheiten.

$\lambda_{max}$ (Wasser-Eisesig 2:1) 499 nm.

Entsprechend der herstellungsvorschrift von Beispiel 21 lassen sich nach der folgenden allgemeinen Reaktionsvorschrift die Verbindungen der Beispiele 22—167 herstellen. Die mit * gekennzeichneten Größen sind tabelliert.

Allgemeine Reaktionsvorschrift

a) Eine Mischung von 30 mmol eines Farbstoffes * mit * g N-Methylolchloracetamid werden bei 0—5°C klumpenfrei in * ml * %ige Schwefelsäure eingetragen und 2 Stunden bei 0—5°C gerührt. Man rührt dann 1. über Nacht bei *°C und anschließend gegebenenfalls 2. * Stunden bei *°C nach. Wenn die Reaktion beendet ist, wird auf Eis gegeben, abgesaugt, neutral gewaschen und getrocknet. Man erhält ein Produkt mit n * $—CH_2—NH—CO—CH_2—Cl$-Resten.

b) 10 mmol des vorstehenden Produkts werden mit 1,5 n mmol Thioharnstoff durch Erhitzen in verdünnter Essigsäure in 1 Stunde bei 95—100°C umgesetzt. Dabei entsteht eine Verbindung die direkt zum Färben verwendet werden kann. Die Nuance inhrer Ausfärbung auf Papier ist tabelliert. Die Reaktionsansätze sind so zu wählen, daß 100%iger Farbstoffausbeute die fertige Lösung 10—15% Farbstoff und 10% Eisessig enthält. In vielen Fällen kann der Anteil der Essigsäure auf 5% gegebenenfalls auch 1% reduziert werden. Anteile von über 10% oder der Verzicht auf Säure bringen im allgemeinen keine Vorteile. Statt Essigsäure können auch andere der im allgemeinen Teil genannten Säuren Verwendung finden. Oft ist es von Vorteil Emulgatoren und/oder andere Zusätze zur Erhöhung der Lösungsstabilität zu verwenden.

Verwendet man statt Thioharnstoff Ethylenthioharnstoff, erhält man im allgemeinen gleichartige Produkte. Gelegentlich sind in letzterem Falle jedoch die Naßechtheiten noch etwas besser. Statt Thioharnstoff können ferner N-Methyl-, N,N'-Dimethyl-, N-Alkyl- oder N-Phenylthioharnstoff verwendet werden. Die so erhaltenen Produkte gleichen den zuvorgenannten weitgehend.

| Bei-spiel | 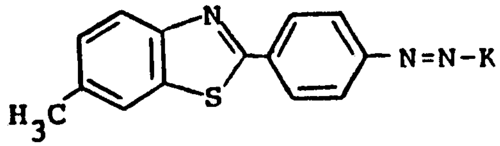 | MCA g | $H_2SO_4$ ml | $H_2SO_4$ % | Nachrühren 1. Über Nacht | Nachrühren 2. h | Nachrühren 2. °C | n | Nuance |
|---|---|---|---|---|---|---|---|---|---|
| 22 | K = 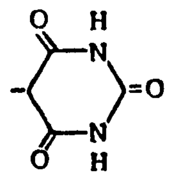 | 4,5 | 60 | 100 | Rt | 0,5 | 100 | 1 | gelb |
| 23 | dto. | 8,8 | 60 | 100 | RT | 1 | 100 | 1,7 | gelb |
| 24 | 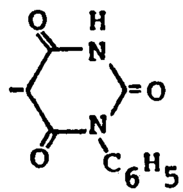 | 8,9 | 60 | 100 | RT | 3 | 45 | 2 | gelb |
| 25 | 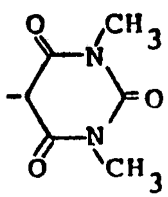 | 4,5 | 60 | 100 | RT | 2 | 70 | 1 | gelb |

| Beispiel | K = | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|
| 26 | 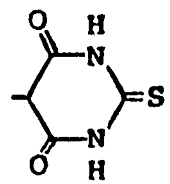 | 4,5 | 60 | 100 | RT | 2 | 60 | 1 | gelb |
| 27 | 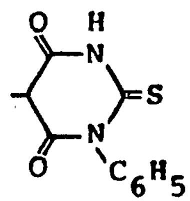 | 9,0 | 60 | 100 | RT | 3 | 45 | 2 | gelb |
| 28 | 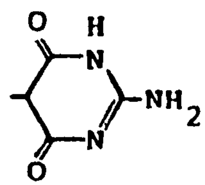 | 4,5 | 60 | 100 | RT | 2 | 70 | 1 | gelb |
| 29 | 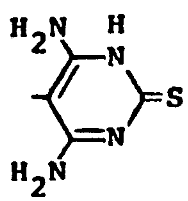 | 4,5 | 60 | 100 | RT | 2 | 70 | 1 | gelb |

| Beispiel | K = | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|
| 30 | 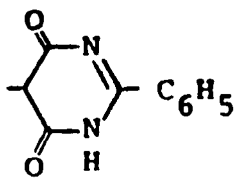 | 7,1 | 60 | 100 | RT | 2 | 60 | 1,5 | gelb |
| 31 | 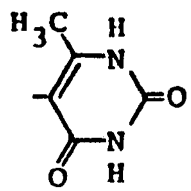 | 4,5 | 60 | 100 | RT | 2 | 60 | 1 | gelb |

| Bei-spiel | 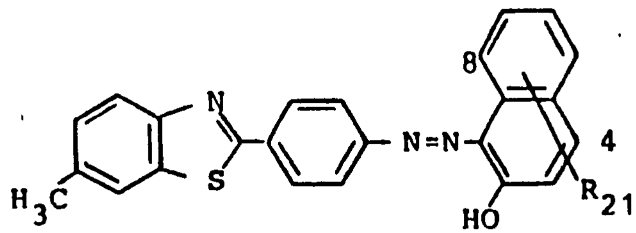 | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|
| 32 | $R_{21}$ = 4-Chlor | 9,5 | 60 | 100 | RT | 2 | 45 | 2 | rot |
| 33 | 4-Brom | 9,5 | 70 | 100 | RT | 2 | 45 | 2 | rot |
| 34 | 4-Methyl | 14,3 | 60 | 100 | RT | 2 | 45 | 2,6 | rot |
| 35 | 4-Ethyl | 14,3 | 60 | 100 | RT | 2 | 45 | 2,7 | rot |
| 36 | 4-Methoxy | 14,3 | 60 | 100 | RT | 2 | 45 | 3 | rot |
| 37 | 8-Methylamino | 12,0 | 60 | 100 | RT | 2 | 45 | 2,5 | rot |
| 38 | 8-Anilino | 14,3 | 80 | 100 | RT | 2 | 45 | 3 | rot |

| Beispiel | | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|
| | $R_{21}$ = | | | | | | | | |
| 39 | 8-Hydroxy | 14,3 | 60 | 100 | RT | 2 | 45 | 3 | rot |

| Beispiel | 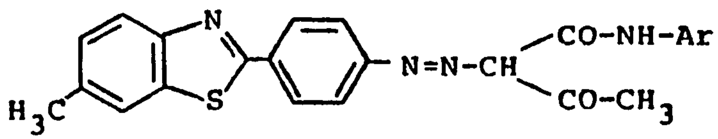 | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|
| | Ar = | | | | | | | | |
| 40 | Phenyl | 9,3 | 110 | 96 | RT | 3 | 50 | 2 | gelb |
| 41 | o-Methoxy-phenyl | 8,4 | 90 | 90 | RT | 1 | 40 | 2 | gelb |
| 42 | o-Ethyl-phenyl | 8,4 | 90 | 90 | RT | 2 | 45 | 2 | gelb |
| 43 | 2,4-Dichlor-phenyl | 4,5 | 90 | 100 | RT | 0,5 | 90 | 1 | gelb |
| 44 | o-Cyano-phenyl | 9,5 | 90 | 100 | RT | 2 | 60 | 2 | gelb |
| 45 | o-Chlor-phenyl | 9,5 | 100 | 100 | RT | 2 | 60 | 2 | gelb |
| 46 | p-Chlor-phenyl | 4,5 | 100 | 100 | RT | 0,5 | 90 | 1 | gelb |

| Bei-spiel | | MCA | $H_2SO_4$ | | Nachrühren | | | n | Nuance |
|---|---|---|---|---|---|---|---|---|---|
| | | | | | 1. | 2. | | | |
| | | g | ml | % | über Nacht | h | °C | | |
| | Ar = | | | | | | | | |
| 47 | p-Brom-phenyl | 4,5 | 100 | 100 | RT | 0,5 | 90 | 1 | gelb |
| 48 | p-Tolyl | 8,4 | 90 | 90 | RT | 1 | 40 | 2 | gelb |
| 49 | m-Sulfamido-phenyl | 4,5 | 90 | 100 | RT | 0,1 | 90 | 1 | gelb |
| 50 | p-Nitro-phenyl | 4,5 | 110 | 100 | RT | 0,5 | 90 | 1 | gelb |
| 51 | p-Amino-phenyl | 4,5 | 80 | 100 | RT | 0,5 | 90 | 1 | gelb |

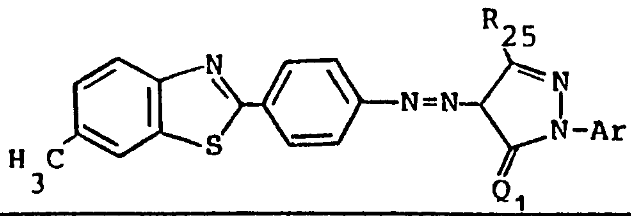

| Beispiel | Q1 | $R_{25}$ | Ar | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|---|---|
| 52 | O | $CH_3$ | Phenyl | 8,4 | 90 | 100 | RT | 2 | 45 | 2 | gelb |
| 53 | O | $CH_3$ | o-Cyano-phenyl | 9,2 | 90 | 100 | RT | 2 | 60 | 2 | gelb |
| 54 | O | $CH_3$ | o-Chlor-phenyl | 9,0 | 90 | 100 | RT | 2 | 60 | 2 | gelb |
| 55 | O | $CH_3$ | p-Brom-phenyl | 4,5 | 90 | 100 | RT | 0,5 | 100 | 1 | gelb |
| 56 | O | $CH_3$ | o-Methoxy-phenyl | 8,4 | 90 | 100 | RT | 2 | 45 | 2 | gelb |
| 57 | O | $CH_3$ | p-Tolyl | 8,4 | 90 | 100 | RT | 2 | 45 | 2 | gelb |
| 58 | O | $CH_3$ | p-Nitro-phenyl | 4,5 | 90 | 100 | RT | 0,5 | 100 | 1 | gelb |

| Beispiel | 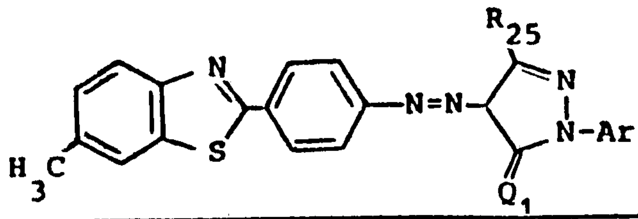 | | | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|---|---|
| | $Q_1$ | $R_{25}$ | Ar | | | | | | | | |
| 59 | O | $CH_3$ | m-Sulfamido-phenyl | 4,5 | 90 | 100 | RT | 0,5 | 100 | 1 | gelb |
| 60 | O | $CH_3$ | p-Sulfamido-phenyl | 4,5 | 90 | 100 | RT | 0,5 | 100 | 1 | gelb |
| 61 | O | $CH_3$ | p-Amino-phenyl | 4,5 | 90 | 100 | RT | 0,5 | 100 | 1 | gelb |
| 62 | O | $CH_3$ | 2,4-Dimethyl-phenyl | 8,4 | 90 | 100 | RT | 2 | 45 | 2 | gelb |
| 63 | O | $COOCH_3$ | Phenyl | 8,4 | 90 | 100 | RT | 2 | 45 | 2 | gelb |
| 64 | O | $COOC_2H_5$ | Phenyl | 8,4 | 90 | 100 | RT | 2 | 45 | 2 | gelb |

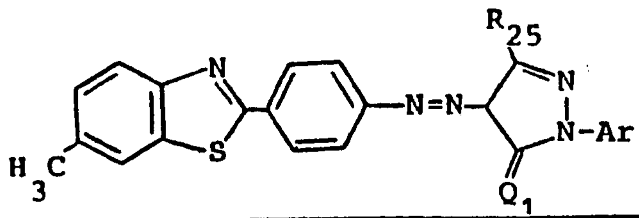

| Beispiel | $Q_1$ | $R_{25}$ | Ar | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|---|---|
| 65 | O | $CONH_2$ | Phenyl | 8,4 | 90 | 100 | RT | 2 | 45 | 2 | gelb |
| 66 | O | $NH_2$ | Phenyl | 8,4 | 90 | 100 | RT | 2 | 45 | 2 | gelb |
| 67 | NH | $CH_3$ | Phenyl | 8,4 | 90 | 100 | RT | 2 | 45 | 2 | gelb |

| Beispiel | 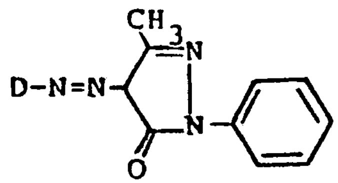 | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|
| 68 | D = 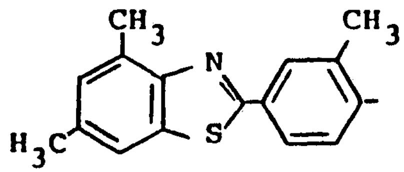 | 8,4 | 100 | 100 | RT | 2 | 45 | 2 | gelb |
| 69 | 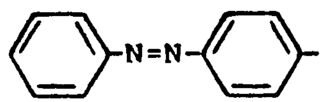 | 8,4 | 100 | 100 | RT | - | - | 2 | goldgelb |
| 70 | 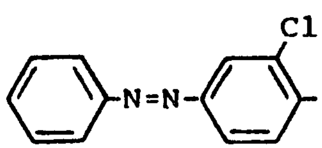 | 8,4 | 100 | 100 | RT | 1 | 45 | 2 | goldgelb |
| 71 | 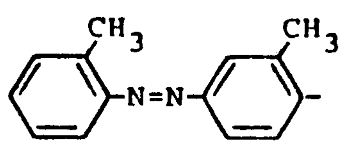 | 8,4 | 100 | 100 | RT | 1 | 45 | 2 | goldgelb |
| 72 | 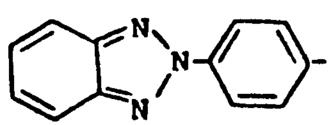 | 8,4 | 100 | 100 | RT | 1 | 45 | 2 | gelb |

| Beispiel | | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|
| 73 | 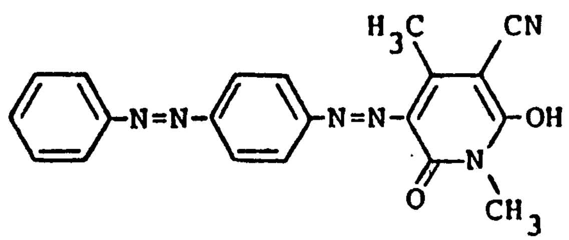 | 9,5 | 100 | 100 | RT | 1 | 60 | 2 | goldgelb |
| 74 | 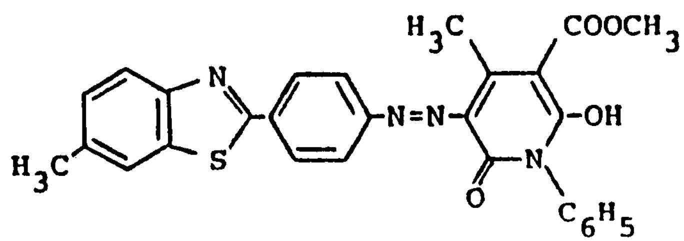 | 8,4 | 100 | 100 | RT | 2 | 45 | 2 | goldgelb |

| Beispiel | | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|
| 75 | 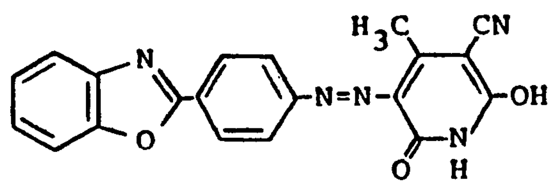 | 4,5 | 100 | 100 | RT | 0,5 | 100 | 1 | goldgelb |
| 76 | 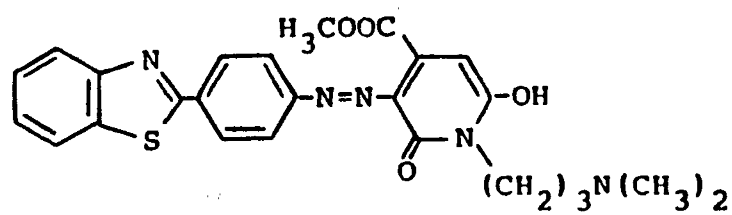 | 4,5 | 100 | 100 | RT | 0,5 | 100 | 1 | goldgelb |
| 77 | 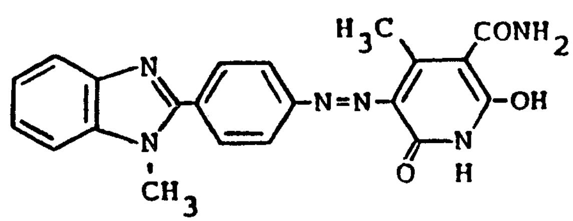 | 4,5 | 100 | 100 | RT | 0,5 | 100 | 1 | goldgelb |

| Beispiel | | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|
| 78 | 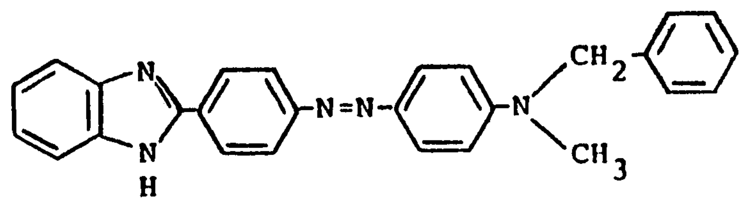 | 14,5 | 100 | 100 | RT | 2 | 45 | 3 | goldgelb |
| 79 | 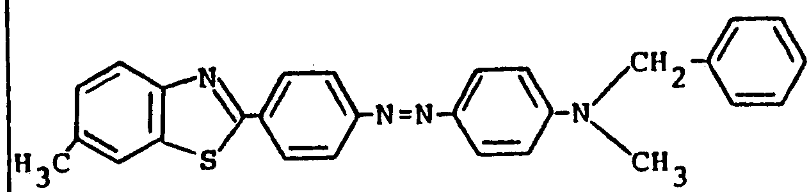 | 9,0 | 70 | 100 | RT | 2 | 45 | 2 | goldgelb |
| 80 | 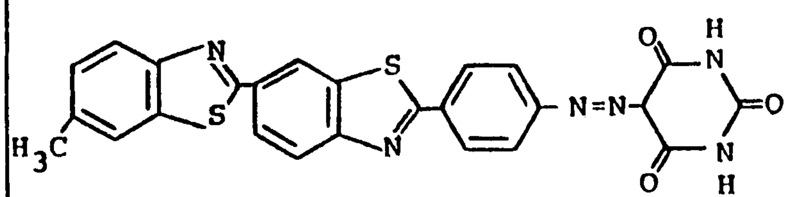 | 9,0 | 80 | 100 | RT | 0,5 | 100 | 2 | orange |

| Beispiel | | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|
| 81 | 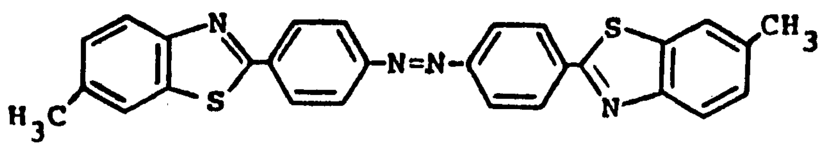 | 11,2 | 120 | 100 | RT | 4 | 45 | 2 | gelb |

| Bei-spiel | | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|
| 82 | 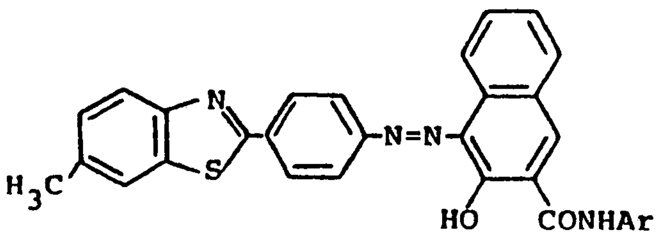 Ar = Phenyl | 12,0 | 100 | 96 | RT | - | - | 3 | blau st. rot |
| 83 | p-Methoxyphenyl | 12,0 | 100 | 96 | RT | - | - | 3 | blau st. rot |
| 84 | o-Methoxyphenyl | 12,0 | 100 | 96 | RT | - | - | 3 | blau st. rot |
| 85 | 1-Naphthyl | 11,3 | 100 | 96 | RT | - | - | 3 | blau st. rot |

| Beispiel | $D(N=N-K)_2$ | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|
| | D = 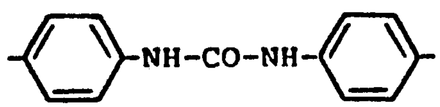 | | | | | | | | |
| 86 | K = $CH_3-CO-CH-CO-NH-C_6H_5$ | 16,0 | 150 | 90 | RT | - | - | 4 | gelb |
| 87 | 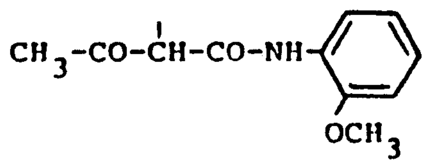 | 16,0 | 150 | 90 | O-5 | - | - | 4 | gelb |
| 88 | ß-Naphthol | 16,0 | 80 | 96 | RT | - | - | 3,5 | blaust. rot |
| | D = 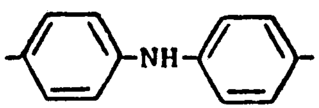 | | | | | | | | |
| 89 | K = ß-Naphthol | 16,0 | 80 | 96 | RT | - | - | 4 | rotst. blau |

| Beispiel | | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|
| 90 | K = 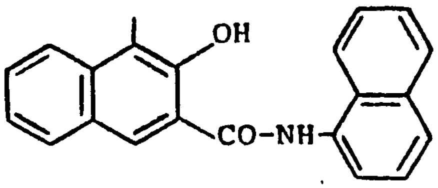 | 16,0 | 100 | 96 | RT | - | - | 4 | blau |
| 91 | 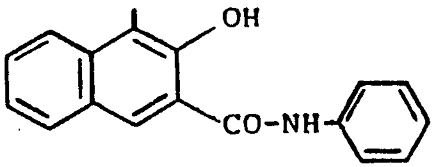 | 16,0 | 100 | 96 | RT | - | - | 4 | blau |
| 92 | D = 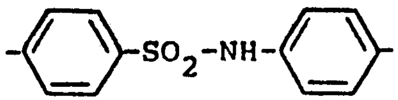 K = ß-Naphthol | 16,0 | 100 | 96 | RT | - | - | 3,2 | rot |
| 93 | D = 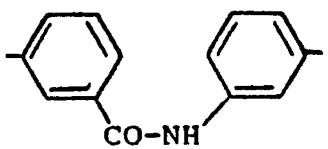 K = ß-Naphthol | 16,0 | 80 | 96 | RT | - | - | 3,7 | orange |

| Beispiel | | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|
| | K = | | | | | | | | |
| 94 | 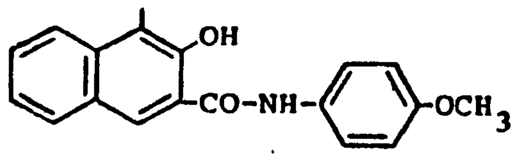 | 16,0 | 100 | 96 | RT | - | - | 4 | rot |
| 95 | 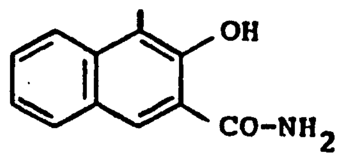 | 16,0 | 100 | 96 | RT | - | - | 4 | orangerot |
| 96 | 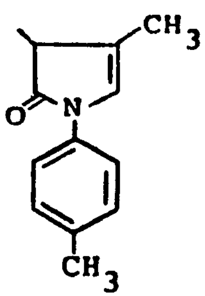 | 16,0 | 80 | 96 | RT | - | - | 4 | goldgelb |
| 97 | 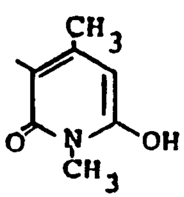 | 8,0 | 80 | 100 | RT | 2 | 45 | 2 | gelb |

| Bei-spiel | | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|
| 98 | D = 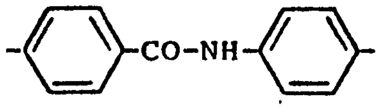 K = ß-Naphthol | 16,0 | 80 | 96 | RT | - | - | 3,5 | rot |
| 99 | 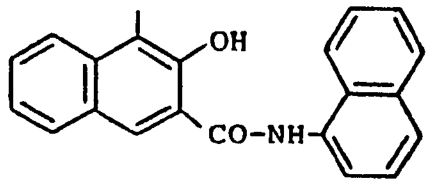 | 16,0 | 100 | 96 | RT | - | - | 4 | blau-st. rot |
| 100 | 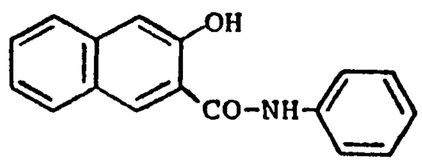 | 16,0 | 100 | 96 | RT | - | - | 4 | blau-st. rot |
| 101 | 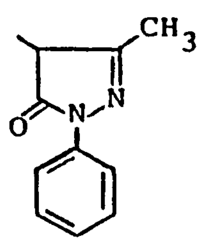 | 16,0 | 80 | 96 | RT | - | - | 4 | gold-gelb |

| Beispiel | | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|
| 102 | K = 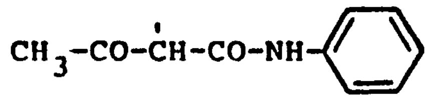 | 16,0 | 80 | 90 | 0-5 | - | - | 4 | gelb |
| 103 | 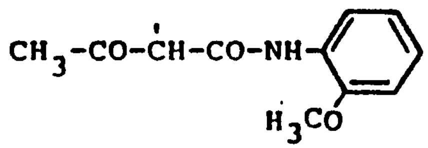 | 16,0 | 80 | 90 | 0-5 | - | - | 4 | gelb |
| 104 | D = 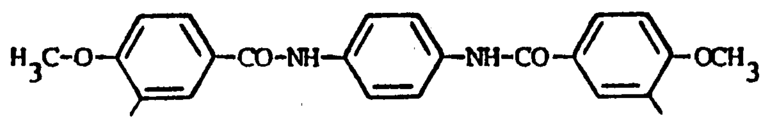<br>K = ß-Naphthol | 16,0 | 100 | 96 | RT | - | - | 4 | rot |
| 105 | D = 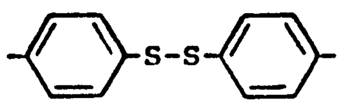<br>K = 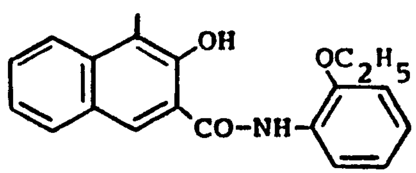 | 16,0 | 100 | 96 | RT | - | - | 4 | blaust. rot |
| 106 | 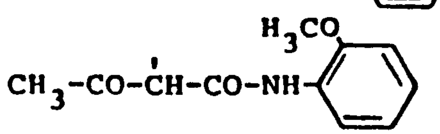 | 16,0 | 80 | 90 | 0-5 | - | - | 4 | goldgelb |

| Beispiel | | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|
| 107 | D = 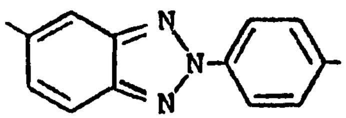<br>K = ß-Naphthol | 8,0 | 80 | 96 | RT | - | - | 2 | rot |
| 108 | D = 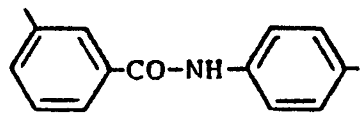<br>K = 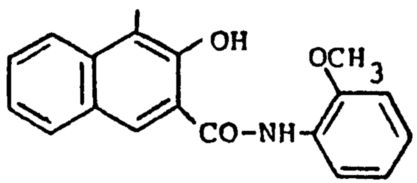 | 16,0 | 100 | 96 | RT | - | - | 4 | blaust. rot |
| 109 | D = 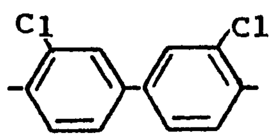<br>K = $CH_3-CO-CH-CO-NH-C_6H_5$ | 16,0 | 120 | 90 | RT | - | - | 4 | gelb |
| 110 | $CH_3-CO-CH-CO-NH-$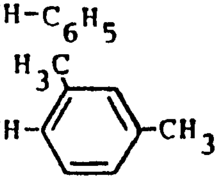 | 8,0 | 120 | 90 | RT | - | - | 2 | gelb |

| Beispiel | | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|
| 111 | K = 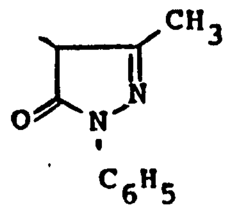 | 16,0 | 100 | 96 | RT | - | - | 4 | orange |
| 112 | D = 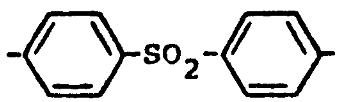 K = 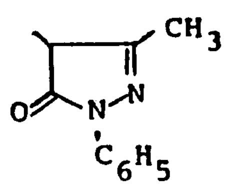 | 16,0 | 100 | 100 | RT | - | - | 4 | goldgelb |
| 113 | D = 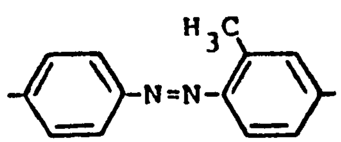 K = ß-Naphthol | 16,0 | 100 | 100 | RT | 1 | 45 | 4 | violett |

| Beispiel | | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|
| | D = 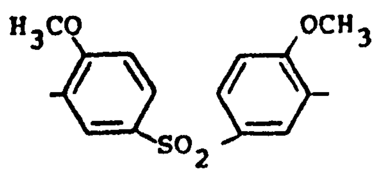 | | | | | | | | |
| 114 | K = ß-Naphthol | 16,0 | 80 | 96 | RT | 2 | 45 | 4 | orange |
| 115 | 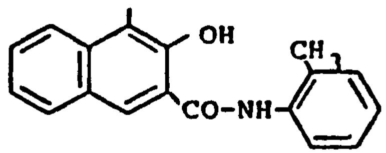 | 16,0 | 100 | 96 | RT | - | - | 4 | rot |
| | D = 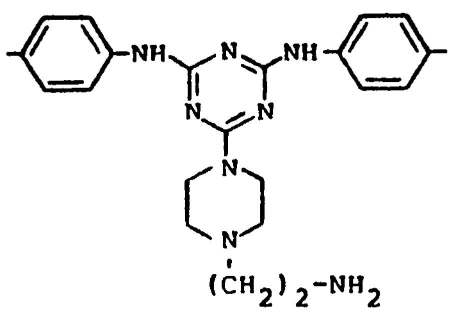 | | | | | | | | |
| 116 | K = 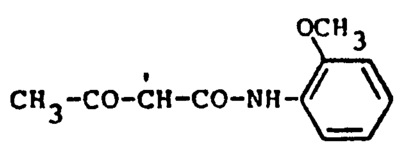 | 16,0 | 100 | 90 | 0-5 | - | - | 4 | gelb |

| Beispiel | | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|
| 117 | D = 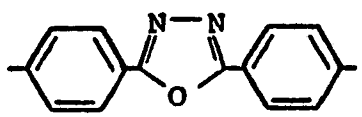 K = ß-Naphthol | 16,0 | 80 | 100 | RT | 2 | 45 | 4 | rot |
| 118 | 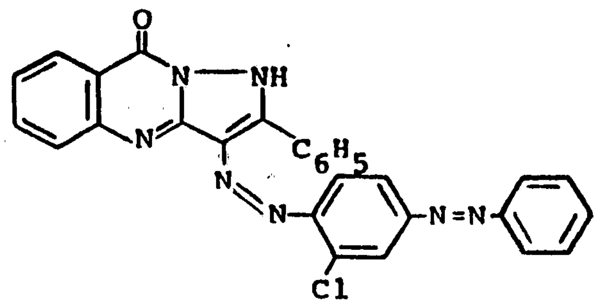 | 8,4 | 100 | 100 | RT | 2 | 45 | 2 | rot |
| 119 | 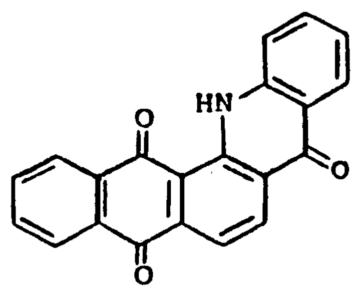 | 8,4 | 100 | 100 | RT | 2 | 60 | 2 | orangerot |
| 120 | Indigo | 8,2 | 100 | 100 | RT | 2 | 60 | 2 | blau |

| Beispiel | | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|
| 121 | 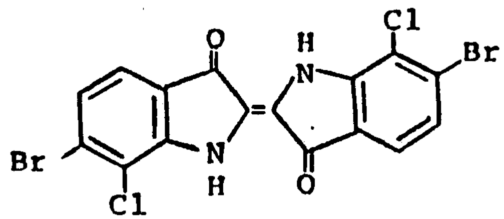 | 8,2 | 100 | 100 | RT | 2 | 60 | 2 | blau |
| 122 | Thioindigo | 8,2 | 100 | 100 | RT | 2 | 60 | 2 | violett |
| | 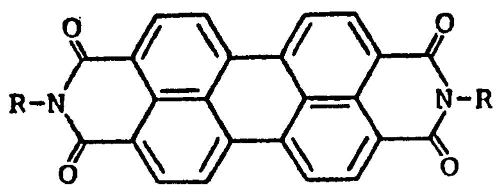 | | | | | | | | |
| 123 | R = $CH_3$ | 8,0 | 80 | 96 | RT | - | - | 2 | rot |
| 124 | 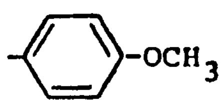 | 15,0 | 80 | 90 | RT | - | - | 3,5 | rot |
| 125 | 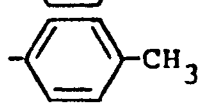 | 15,0 | 80 | 90 | RT | - | - | 3,5 | rot |

| Beispiel | | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|
| 126 | Indanthron | 8,0 | 80 | 100 | RT | 2 | 45 | 2 | blau |
| 127 | Violanthron | 8,0 | 80 | 100 | RT | 2 | 45 | 2 | blau |
| 128 | Isoviolanthron | 8,0 | 80 | 100 | RT | 2 | 45 | 2 | violett |
| | 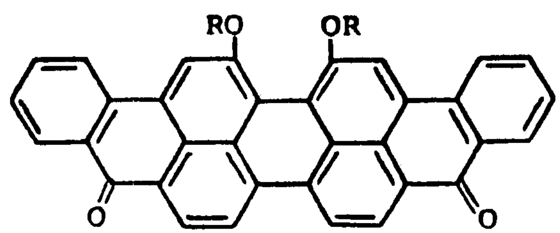 | | | | | | | | |
| 129 | R = $CH_3$ | 8,0 | 80 | 100 | RT | 2 | 45 | 2 | blau |
| 130 | RR = $-(CH_2)_2-$ | 8,0 | 80 | 100 | RT | 2 | 45 | 2 | blau |
| 131 | 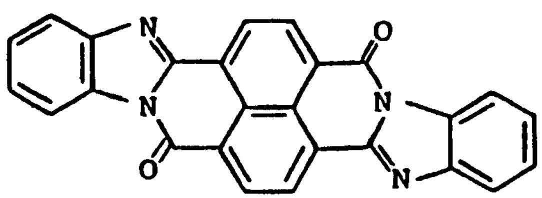 | 8,0 | 80 | 100 | RT | 2 | 45 | 2 | orange |

| Beispiel | | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|
| 132 | 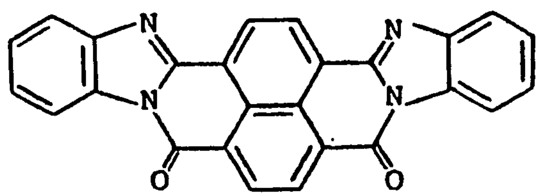 | 8,0 | 80 | 100 | RT | 2 | 45 | 2 | rot |
| 133 | 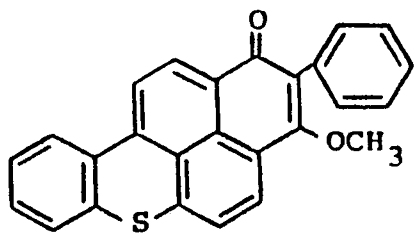 | 12,0 | 80 | 100 | RT | 2 | 45 | 3 | rot |
| 134 | 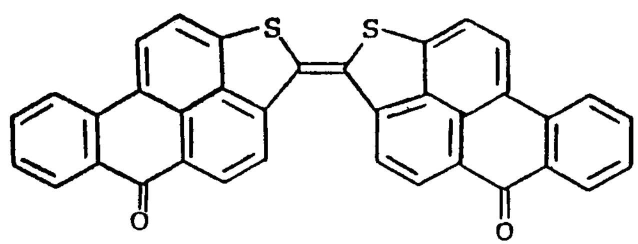 | 12,0 | 100 | 100 | RT | 2 | 45 | 3 | oliv |

| Beispiel | | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|
| 135 | 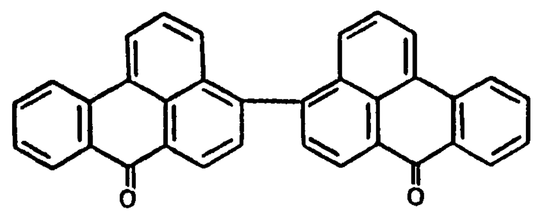 | 8,0 | 100 | 100 | RT | 2 | 45 | 2 | gelbst. grün |
| 136 | 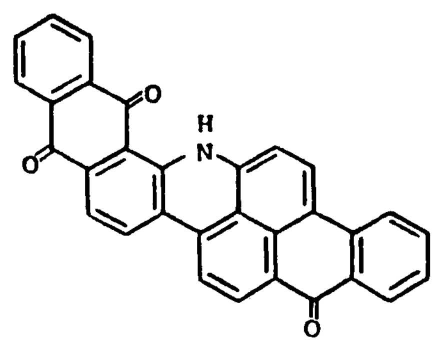 | 8,0 | 100 | 100 | RT | 2 | 45 | 2 | oliv |
| 137 | 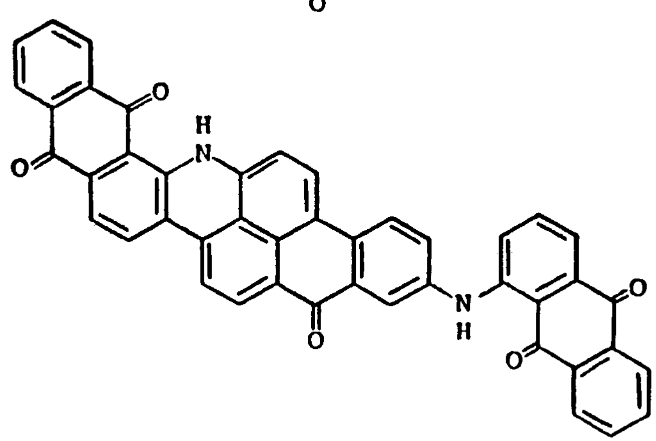 | 12,2 | 120 | 100 | RT | 2 | 60 | 3 | oliv |

| Beispiel | | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|
| 138 | 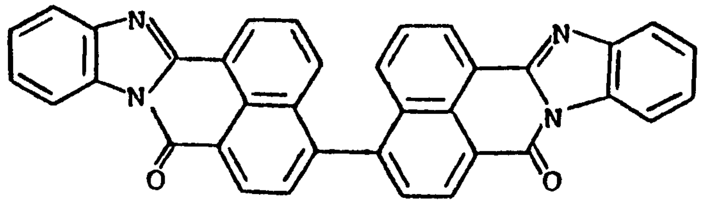 | 8,0 | 100 | 100 | RT | 2 | 45 | 2 | gelb |
| 139 | 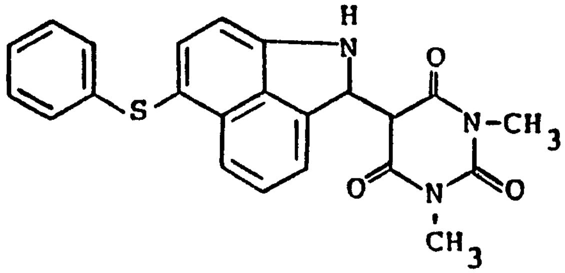 | 8,0 | 80 | 100 | RT | - | - | 2 | rot |
| 140 | 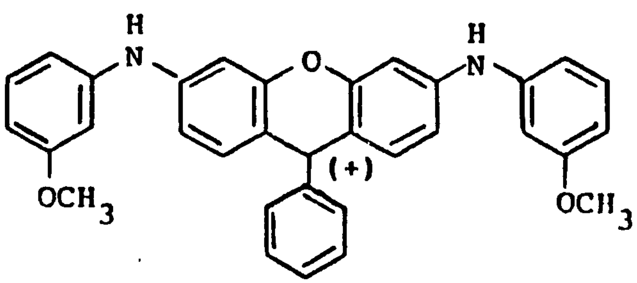 $HSO_4^{\ominus}$ | 8,6 | 80 | 85 | RT | - | - | 2 | rotviolett |

| Bei-spiel | | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|
| 141 | 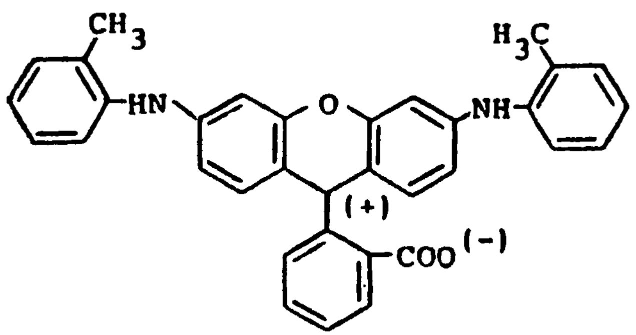 | 8,3 | 80 | 90 | RT | - | - | 2 | rotviolett |
| 142 | 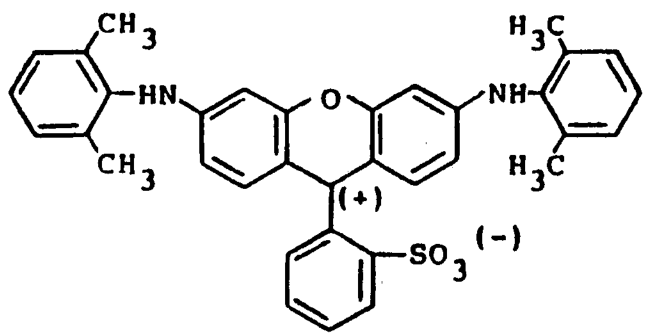 | 8,3 | 80 | 90 | RT | - | - | 2 | rot |
| 143 | 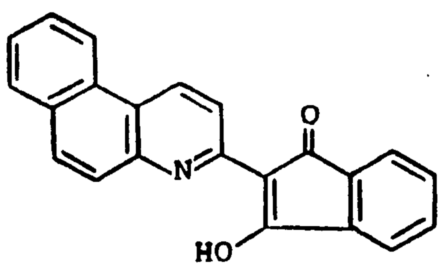 | 8,2 | 40 | 100 | RT | - | - | 2 | gelb |

| Bei-spiel | | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|
| 144 | 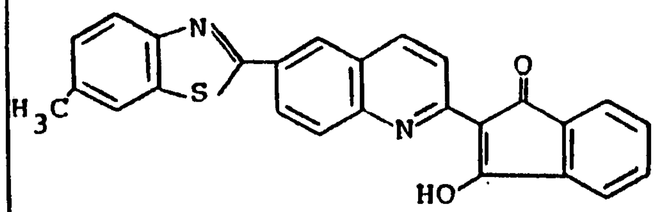 | 4,0 | 60 | 100 | RT | 2 | 60 | 1 | gelb |
| 145 | 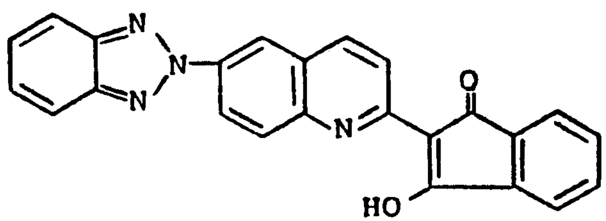 | 4,0 | 60 | 100 | RT | 2 | 60 | 1 | gelb |
| 146 | 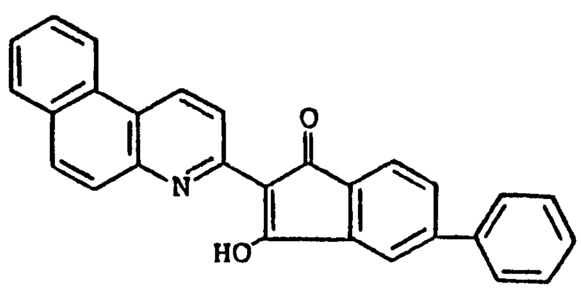 | 8,0 | 60 | 100 | RT | - | - | | gelb |

| Bei-spiel | | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|
| 147 | 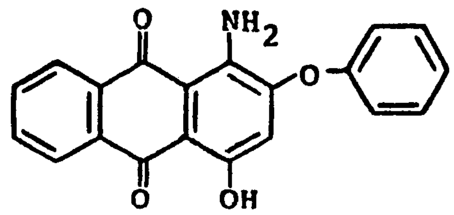 | 4,4 | 70 | 100 | 0-5 | - | - | 1 | rot |
| 148 | 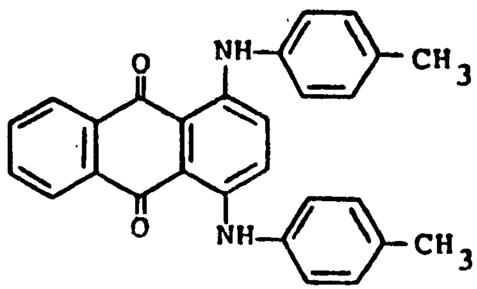 | 8,3 | 70 | 100 | 0-5 | - | - | 2 | blaugrün |
| 149 | 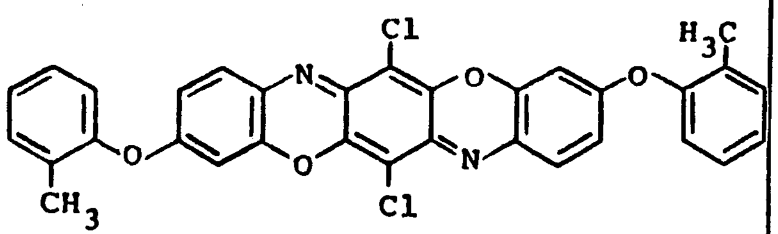 | 8,3 | 90 | 90 | 0-5 | - | - | 2 | blaust. rot |

| Beispiel | | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|
| 150 | 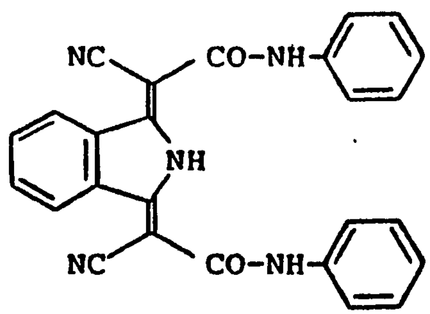 | 12,0 | 70 | 100 | RT | 2 | 45 | 2,5 | gelb |
| | 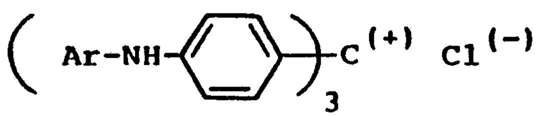 | | | | | | | | |
| 151 | Ar = Phenyl | 15,7 | 150 | 100 | RT | - | - | 4 | blau |
| 152 | p-Tolyl | 12,4 | 130 | 100 | RT | - | - | 3 | blau |
| 153 | m-Tolyl | 12,4 | 130 | 100 | RT | - | - | 3 | blau |
| 154 | p-Anisyl | 15,7 | 150 | 100 | RT | - | - | 4 | blau |
| 155 | o-Anisyl | 15,7 | 150 | 100 | RT | - | - | 4 | blau |

| Beispiel | | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|
| 156 | Ar = p-Phenethyl | 15,7 | 150 | 100 | RT | - | - | 4 | blau |
| 157 | p-Chlorphenyl | 12,5 | 150 | 100 | RT | 3 | 70 | 3 | blau |
| 158 | 1-Naphthyl | 15,7 | 150 | 100 | RT | - | - | 4 | blau |
| 159 | 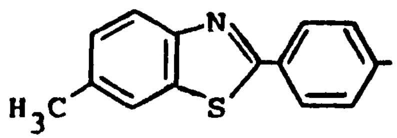 | 12,5 | 150 | 100 | RT | 3 | 70 | 3 | blau |
| 160 | 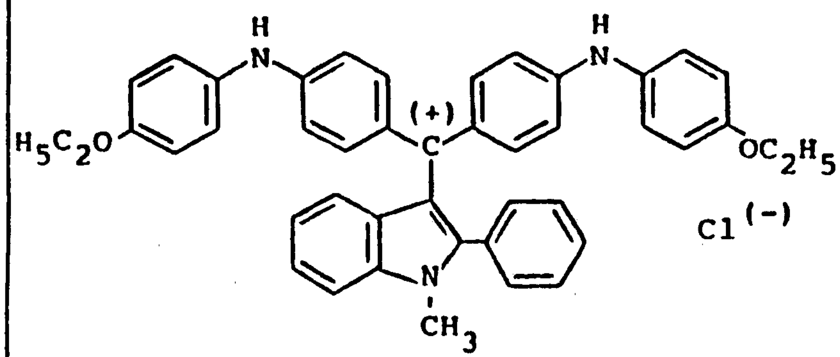 | 12,5 | 150 | 100 | RT | - | - | 3 | blau |

| Bei-spiel | | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|
| 161 | 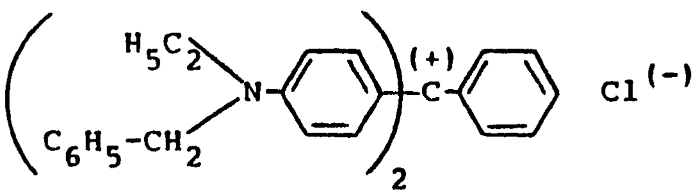 | 8,0 | 100 | 100 | RT | - | - | 2 | grün |
| 162 | 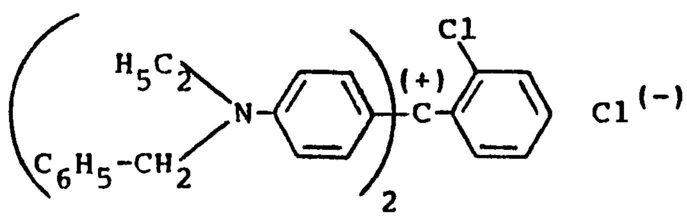 | 8,0 | 100 | 100 | RT | - | - | 2 | grün |
| 163 | 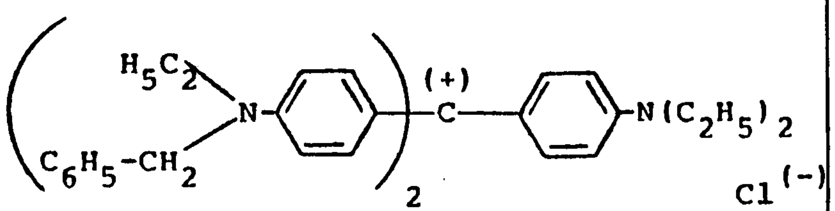 | 8,0 | 100 | 100 | RT | - | - | 2 | violett |

| Beispiel | | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|
| 164 | 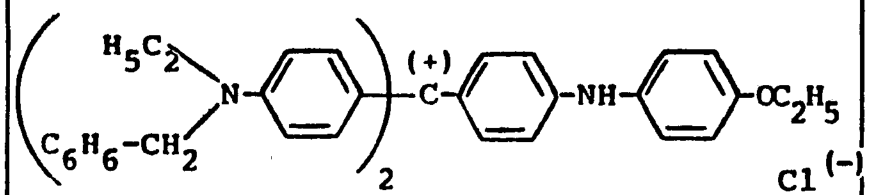 | 12,0 | 150 | 100 | RT | - | - | 3 | blau |
| 165 | 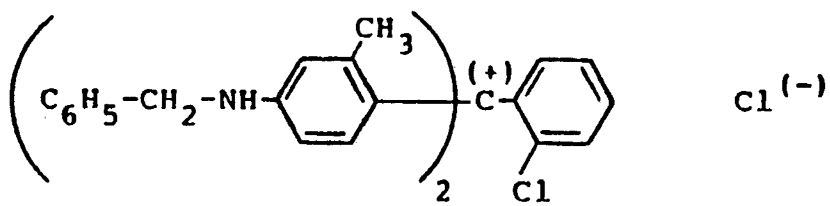 | 8,0 | 100 | 100 | RT | - | - | 2 | grünst. blau |
| 166 | 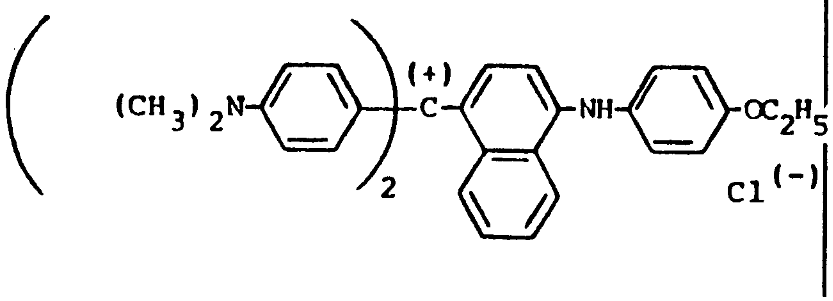 | 8,0 | 100 | 100 | RT | - | - | 2 | blau |

| Beispiel | | MCA g | $H_2SO_4$ ml | $H_2SO_4$ % | Nachrühren 1. über Nacht | Nachrühren 2. h | Nachrühren 2. °C | n | Nuance |
|---|---|---|---|---|---|---|---|---|---|
| 167 | 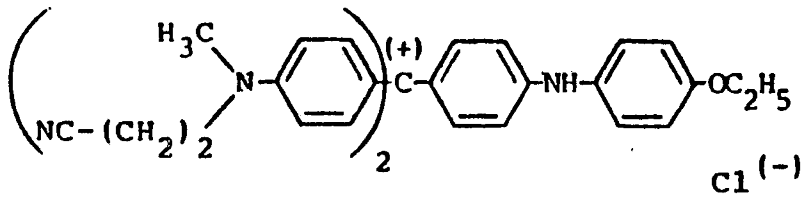 | 8,0 | 100 | 100 | RT | - | - | 2 | blau |

Beispiel 168

a) 61.0 g 95%iges Kupferphtalocyanin werden bei 100°C in 800 g Polyphosphorsäure eingetragen. Man versetzt mit 18,0 g N-Methylolchloracetamid (MCA) und heizt auf 125—130°C auf. Nun werden weitere 60,0 g MCA in Portionen von 10,0 g im Abstand von 15 Minuten eingetragen und es wird 3 Stunden bei 125—130°C nachgerührt. Der Reaktionsansatz wird dann in 2,1 l Wasser von 50°C eingerührt. Nach Kaltrühren auf 40°C wird abgesaugt, mit Wasser neutral gewaschen und bei 60° getrocknet. Man erhält 100,5 g der Verbindung

$$CuPc+(CH_2—NH—CO—CH_2—Cl)_4$$

b) 20,0 g der vorstehenden Verbindung werden in 250 ml 15%iger Essigsäure mit 20,6 g N-Methyl-N,N'-trimethylen-thioharntoff versetzt und die Mischung 2 Stunden bei 90—95°C gehalten. Man fügt dann 120 ml Eisessig hinzu und rührt die Lösung kalt. Sie färbt Papier türkisfarben und enthält die Verbindung

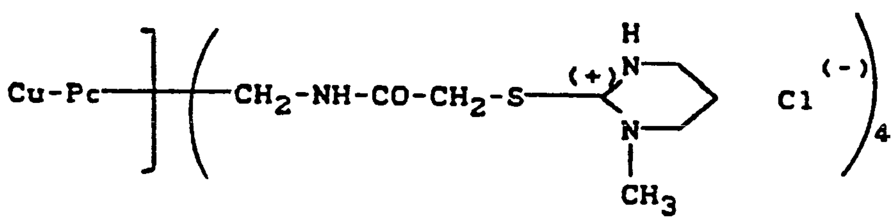

$\lambda_{max}$ (Wasser Eisessig 2:1) 603 nm.

Beispiel 169

Setzt man die Verbindung aus Beispiel 168 a) statt mit N,N'trimethylen-thioharnstoff mit 16,0 g Ethylenthioharnstoff um und verfährt ansonsten wie in Beispiel 168 b), erhält man eine Lösung der Verbindung

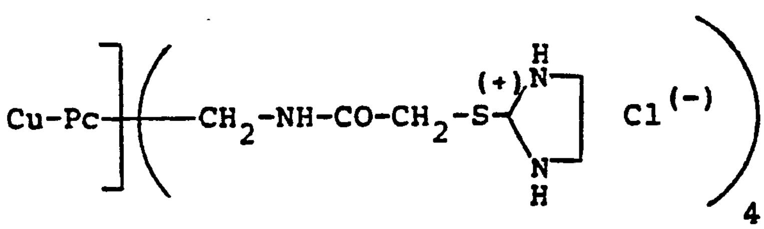

die der vorstehenden in ihren Eigenschaften gleicht.

Beispiel 170

Setzt man statt Kupferphthalocyanin die entsprechende Nickelverbindung ein und verfährt im übrigen wie in den Beispielen 168 a) und 169, erhält man eine Lösung der Verbindung

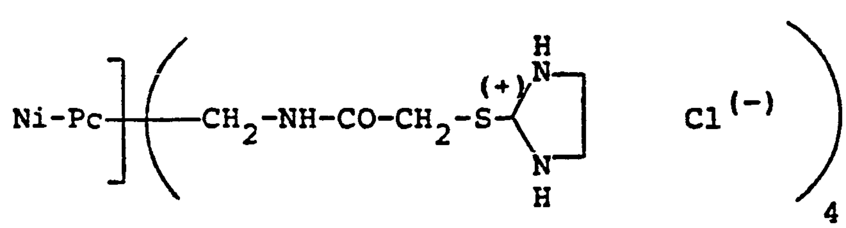

Nuance auf Papier blaustichig grün

Beispiel 171

a) 50,0 g Dehydrothiotoluidin und 31,0 g N-Methylolchloraccetamid werden als Mischung bei 0—5° in 300 ml Monohydrat eingetragen. Man rührt 2 Stunden bei dieser Temperatur weiter, rührt über Nacht bei Raumtemperatur und zuletzt 1 Stunde bei 100°C. Nach Abkühlen auf 30°C wird auf 2 kg Eis gegeben, abgesaugt, neutralgewaschen und getrocknet. Man erhält die Verbindung

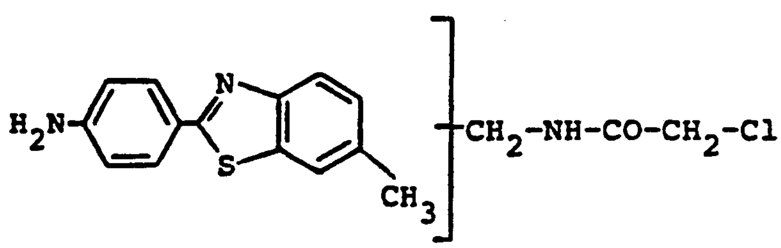

b) Wird diese Verbindung in üblicher Weise diazotiert und auf Barbitursäure gekuppelt, erhält man

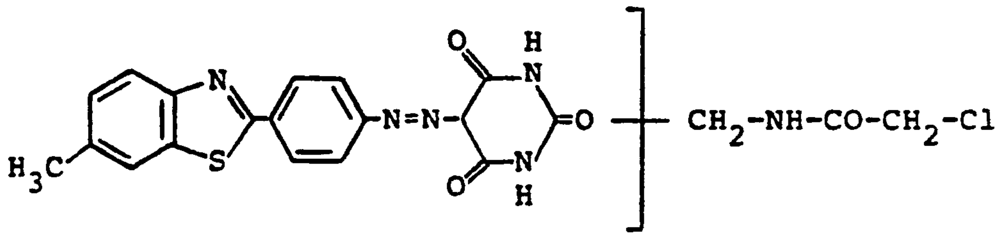

c) Umsetzung dieser Verbindung gemäß der allgemeinen Reaktionsvorschrift Teil b mit Thioharnstoff führt zu einer Verbindung

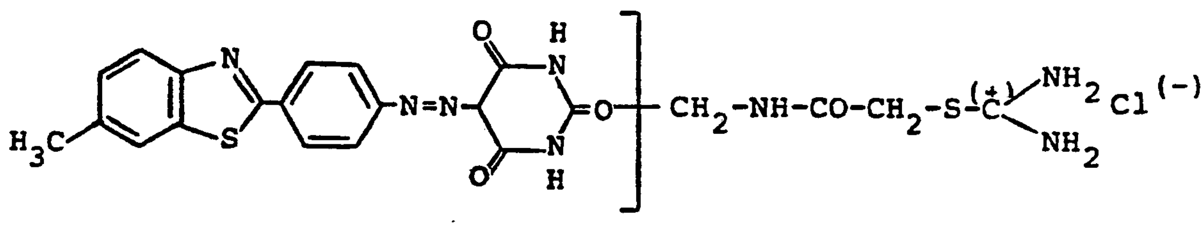

die der aus Beispiel 22 in allen Eigenschaften entspricht.

Beispiel 172

Diazotiert man die Verbindung aus Beispiel 171 a), kupppelt sie auf Cyaniminobarbitursäure und setzt gemäß der allgemeinen Reaktionsvorschrift Teil b mit Ethylenthioharnstoff um, erhält man

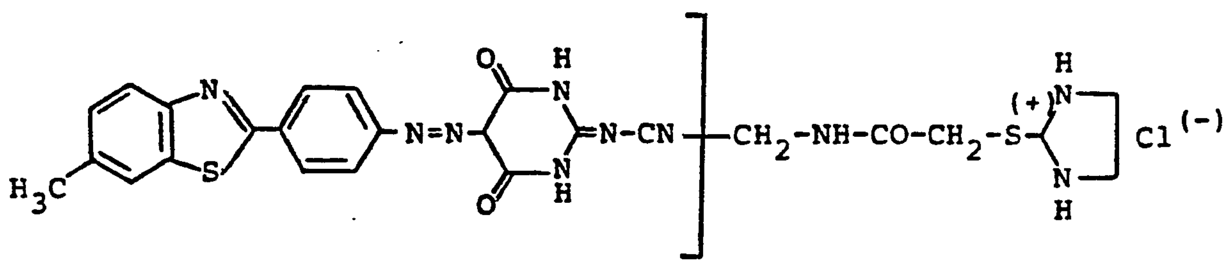

Die Lösung färbt Papier gelb.

**Patentansprüche**

1. Verwendung von Farbstoffen der Formel

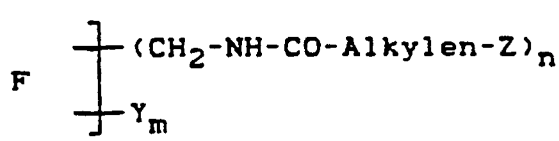

worin

F für einen organischen Chromophor und

Z für Reste der Formeln

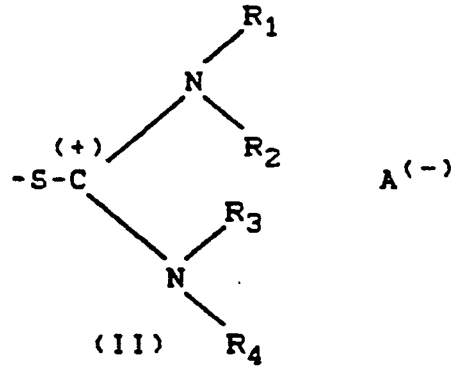

oder

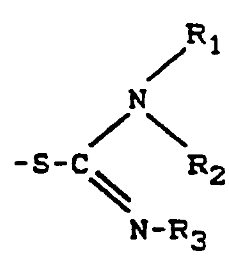

(II)

stehen, worin

$R_1$—$R_4$ Wasserstoff, Alkyl, Cycloalkyl, Alkenyl, Aryl, Aralkyl oder einen Heterocyclus oder

$R_2$ und $R_3$ eine gegebenenfalls substituierte Aminogruppe darstellen oder zusammen einen Ring bilden, oder

$R_1$ mit $R_2$ und/oder $R_3$ mit $R_4$ einen Ring bilden,

$A^{(-)}$ ein Anion,

Y eine anionische Gruppe,

m 0—2 und

n 1—6 bedeuten,

und worin der Chromophor und die genannten Reste weitere Substituenten tragen können mit der Maßgabe, daß die Summe der anionischen Substituenten kleiner ist als die Summe der quartären und quarternierbaren Aminogruppen, zum Färben von Cellulose fasern.

2. Verwendung nach Anspruch 1, dadurch gekennzeichnet, daß man Farbstoffe der Formel

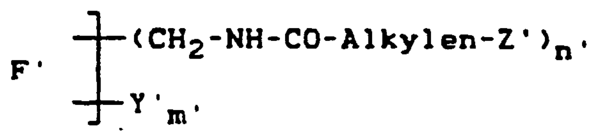

worin

F′ für einen organischen Chromophor mit mindestens 4 carbo und/oder heterocyclischen Fünf- und/oder Sechsringen steht, dessen Ringe kondensiert sein können und durch die vorstehend für Chromophore genannten Reste substituiert sein können,

Z′ die Reste

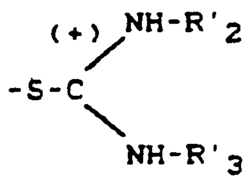

$A^{(-)}$ oder

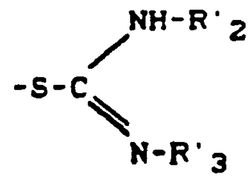

$R'_2$ und $R'_3$ Wasserstoff, $C_1$—$C_4$-Alkyl, $C_2$—$C_4$-Alkenyl, Cyclohexyl, Phenyl oder Tolyl oder

$R'_2$ und $R'_3$ zusammen Ethylen, Trimethylen, Vinylen oder o-Phenylen,

$A^{(-)}$ ein Anion,

Y′ eine Sulfonsäure- oder Sulfonatgruppe,

m′ 0—1 und

n′ 1—5 bedeuten, und

die Anzahl der Sulfonsäuregruppen kleiner ist als die Anzahl der quartären und der quarternierbaren Aminogruppen, einsetzt.

3. Verwendung nach Anspruch 1, dadurch gekennzeichnet, daß man Farbstoffe mit einem Chromophor der Azin-, Azo-, Triarylmethan-, Xanthen-, Thioxanthen-, Phthalocyanin-, Carbonyl-, Benzothioxanthen-, Cumarin-, Naphtholactam-, Isoindolenin-, Formazan-, Nitro- und Cyanin-Reihe einsetzt.

4. Basische Farbstoffe der Formel

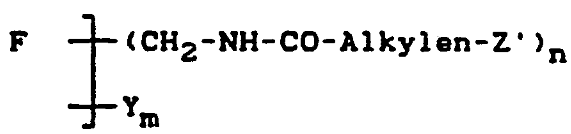

worin

F, Y, m und n die in Anspruch 1 und Z′ die in Anspruch 2 angegebene Bedeutung besitzten, und

$A^{(-)}$ für ein Anion steht.

5. Basische Farbstoffe darf Formel

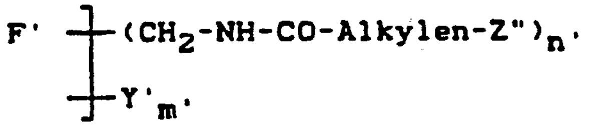

worin

F′, Y′, m′ und n′ die in Anspruch 2 genannte Bedeutung haben, und

Z″ für Reste der Formeln

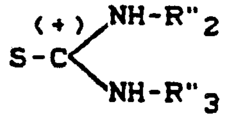

$A^{(-)}$ oder

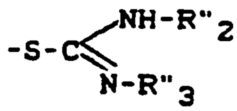

steht, worin

$R''_2$ und $R''_3$ Wasserstoff oder $C_2$—$C_3$-Alkylen, vorzugsweise Ethylen bedeuten.

6. Basische Dioxazinfarbstoffe der Formel

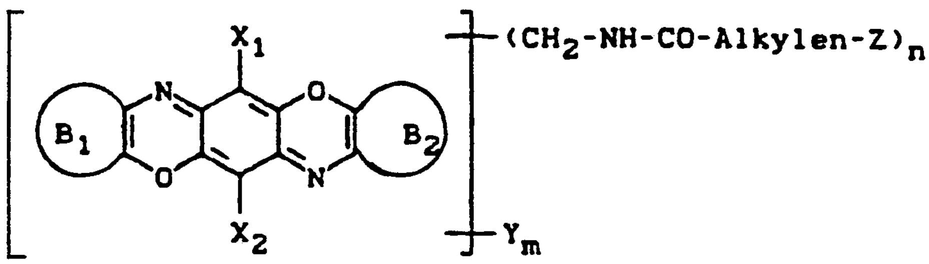

worin

$X_1$ und $X_2$ unabhängig voneinander Wasserstoff, Halogen, Alyl, Cycloalkyl, Aryl, Alkoxy, Aryloxy, CN, $CONH_2$, COHN-Alkyl, CON(Alkyl)$_2$, CONH-Aryl, COO-Alkyl, NH—CO-Alkyl, NH-Aryl, NH—CO-Aryl oder NH—CO-heteroaryl und

$B_1$ und $B_2$ unabängig voneinander einen Benzolring oder ein ankondensiertes Ringsystem mit 2 bis 4 carbocyclischen und/oder heterocyclischen Ringen bedeuten,

Y, Z, m und n die in Anspruch 1 angegebene Bedeutung besitzen,

und die cyclischen und acyclischen Reste und die Ringe $B_1$ und $B_2$ weitere Substituierten tragen können mit der Maßgabe, daß die Summe der quartären und quaternierbaren Aminogruppen.

7. Basische Dioxazinfarbstoffe der Formel

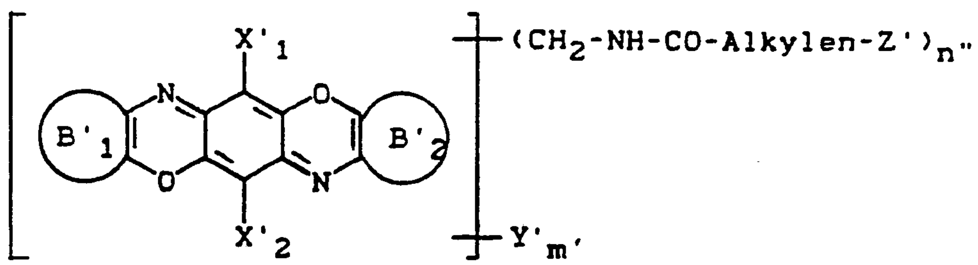

worin

$X'_1$ und $X'_2$ unabhängig voneinander Wasserstoff oder Halogen,

$B'_1$ und $B'_2$ unabhängig voneinander eine Gruppe aus der Reihe Benzol, Naphthalin, Fluoren, Phenothiazin, Diphenylensulfid, Phenanthren, Anthracen, Fluorenon, Carbazol oder Anthrachinon und

$n''$ 2-5 bedeuten, und

Y', Z' und m' die in Anspruch 2 angegebene Bedeutung besitzen.

8. Basische Azofarbstoffe der Formel

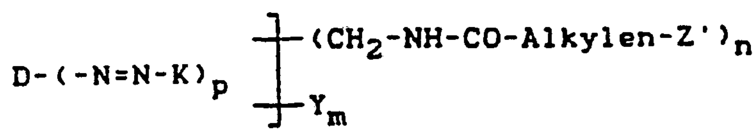

worin

D den Rest einer Diazokomponente,

K den Rest einer Kupplungskomponente und

P 1 oder 2 bedeuten, und

Y, m und n die in Anspruch 1 und

Z' die in Anspruch 2 angegebene Bedeutung besitzen und

die Diazo- und Kupplungskomponenten können weitere Substituenten tragen mit der Maßgabe, daß die Summe der anionischen Substituenten kleiner ist als die Summe der quartären und quaternierbaren Aminogruppen.

9. Basische Azofarbstoffe gemäß Anspruch 8 der Formel

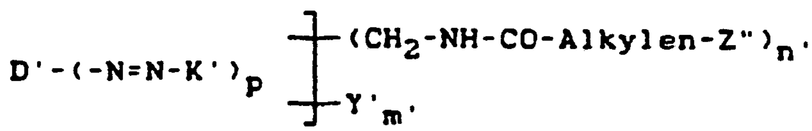

bevorzugt, worin

D' einen Rest der Formeln

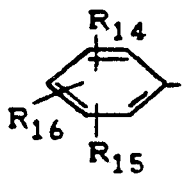

,

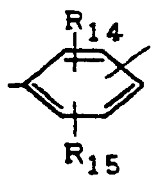

,

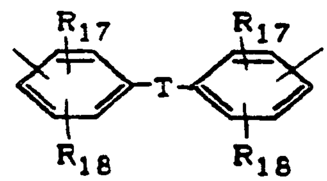

oder

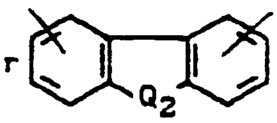

bedeutet, worin

$R_{14}$ und $R_{15}$ unabhängig voneinander für Wasserstoff, Alkyl, Alkoxy, Fluor, Chlor, Brom oder NH—Ac, Ac für Alkyl-carbonyl, -sulfonyl oder -carbamyl, Benzoyl, Toluoyl, Phenyl-, oder Tolylsulfonyl oder -carbamoyl oder gegebenenfalls substituiertes Triazinyl,

$R_{16}$ für Wasserstoff, Alkyl, Alkoxy, Chlor, Brom, NH—Ac oder einen Rest der Formeln

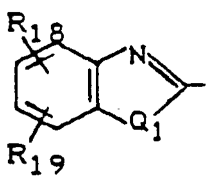

,

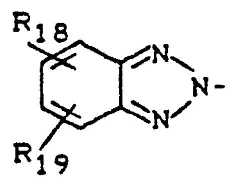

oder

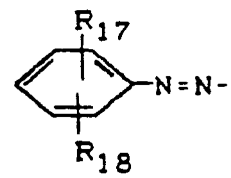

$R_{17}$, $R_{18}$ und $R_{19}$ unabhängig voneinander für Wasserstoff, Alkyl, Alkoxy, Chlor oder Brom,

$R_{19}$ zusätzlich für eine freie Valenz,

$Q_1$ für NH, N-Alkyl, O oder S,

$Q_2$ für $CH_2$, $R'_{13}N$, O oder S,

$R'_{13}$ für Wasserstoff, Alkyl, Alkylcarbonyl oder -sulfonyl oder Benzoyl,

T für direkte Bindung oder Brückenglied,

K für einen Rest der Formeln

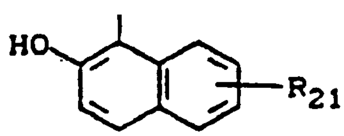

mit $R_{21}$ = H, Halogen wie Chlor oder Brom, OH, Alkyl, Alkoxy, Alkylamino, Phenylamino, Acylamino, $SO_2NH_2$, $SO_2NH$-Alkyl, $SO_2N(Alkyl)_2$;

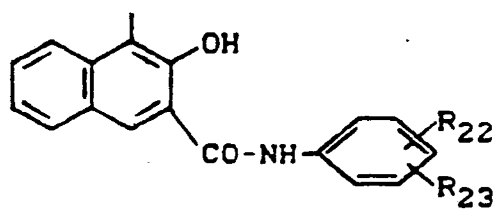

mit

$R_{22}$ = H, Halogen wie Chlor oder Brom, Alkyl, Alkoxy, Phenoxy, Acylamino, $SO_2NH_2$, $SO_2$—NH-Alkyl, $SO_2$—$N(Alkyl)_2$, $NO_2$, CN und

$R_{23}$ = H, Halogen wie Chlor oder Brom, Alkyl, Alkoxy;

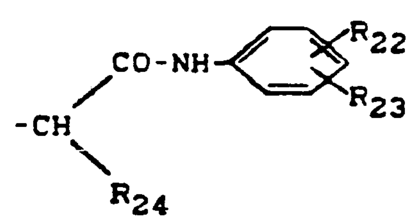

mit

$R_{22}$ und $R_{23}$ in vorgenannter Bedeutung und

$R_{24}$ = $COCH_3$, CO-Phenyl, COO-Alkyl, $CONH_2$ oder CN;

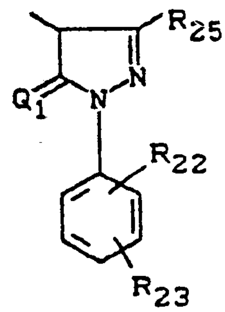

mit

$R_{25}$ = $CH_3$, $COOCH_3$, $COOC_2H_5$ und

$Q_1$, $R_{22}$ und $R_{25}$ in vorgenannter Bedeutung;

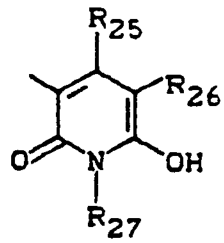

mit

$R_{26}$ = H, Halogen wie Chlor oder Brom, COO-Alkyl, $CONH_2$, CN,

$R_{27}$ = H, Alkyl, Phenyl, Benzyl oder NH—$C_2$—$C_4$-Alkylen-G, wobei G Dialkylamino, 1-Piperidino, 1-Morpholino, 1-Piperazino, 1-Pyrrolidino, Hydroxy oder $C_1$—$C_4$-Alkoxy bedeutet,

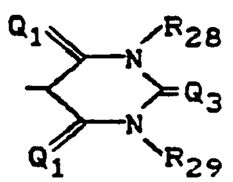 , 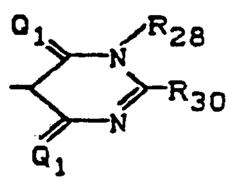 und 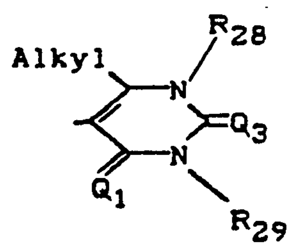

mit

$Q_1$ = unabhängig voneinander obengenannte Bedeutung,

$Q_3$ = O, S, NH, N—CN, N-Phenyl,

$R_{28}$, $R_{29}$ H, Alkyl, Phenylen-$R_{21}$,

$R_{30}$ = H, Alkyl, Phenylen-$R_{21}$, Alkylamino oder Dialkylamino,

Y', m' und n' die unter Anspruch 2,

Z'' die unter Anspruch 5 und

p die unter Anspruch 8 genannte Bedeutung haben.

10. Basische Triarylmethanfarbstoffe der Formel

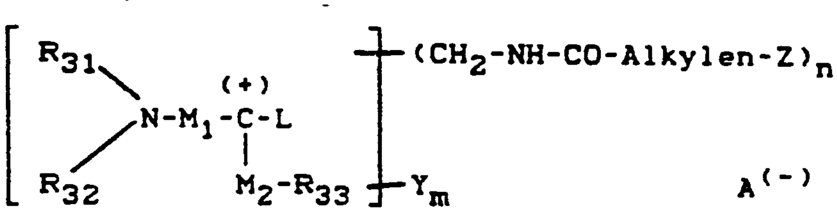

worin

$M_1$ p-Phenylen, gegebenenfalls substituiert mit Alkyl oder Halogen,

$M_2$ p-Phenylen, gegebenenfalls substituiert mit Alkyl, Alkoxy oder Halogen,

$R_{31}$ H, Alkyl, Cycloalkyl, Aryl, Heteroaryl oder Aralkyl und

$R_{32}$ H, Alkyl oder Aralkyl bedeuten, und

$R_{31}$ und $R_{32}$ gegebenenfalls unter Einschluß eines weiteren Heteroatoms aus der Gruppe O, S, NH, N-Alkyl zu einem gesättigten oder der Rest $R_{32}$ mit dem o-ständigen C-Atom von $M_1$ zu einem teilgesättigten, heterocyclischen Ring geschlossen sein können,

$R_{33}$ H, Halogen, Alkyl, Alkoxy oder $NR_{31}R_{32}$,
L einen aromatischen Rest der nachfolgenden Bedeutung;
p-Phenylen-$R_{34}$, gegebenenfalls substituiert mit Alkyl oder Halogen,
1,4-Naphthylen-$R_{34}$, gegebenenfalls substituiert mit Alkyl oder Halogen mit
$R_{34}$ = H, Alkyl, Alkoxy, Aryloxy oder $NR_{31}R_{32}$,

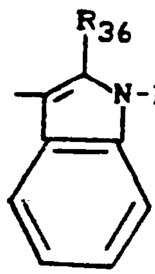

mit
$R_{35}$ = H, Alkyl,
$R_{36}$ = H, Alkyl, gegebenenfalls durch Alkyl, Alkoxy oder Halogen substituiertes Phenyl, COO-Alkyl, $COONH_2$,
$A^{(-)}$ ein Anion für den Fall, daß die Ladung des Chromophors nicht durch den Rest Y kompensiert wird, bedeuten und
Y, Z, m und n die unter Anspruch 1 angegebene Bedeutung haben.

## Revendications

1. Utilisation de colorants de formule

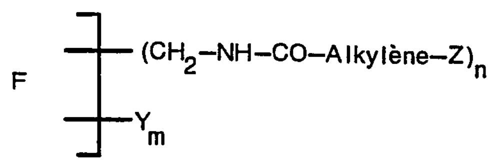

dans laquelle
F représente un chromophore organique et
Z représente les restes de formules

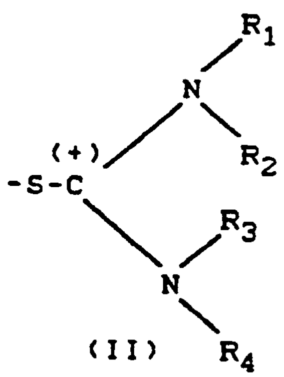

(II)

$A^{(-)}$ oder

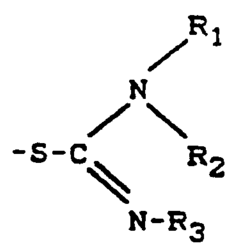

dans lesquelles
$R_1$—$R_4$ représentent l'hydrogène, un groupe alkyle, cycloalkyle, alcényle, aryle, aralkyle ou un hétérocycle ou
$R_2$ et $R_3$ représentent un groupe amino éventuellement substitué ou forment conjointement un noyau, ou bien
$R_1$ forme un noyau avec $R_2$, et/ou $R_3$ forme un noyau avec $R_4$,
$A^{(-)}$ est un anion,
Y est un groupe anionique,
m a une valeur de 0—2 et
n a une valeur de 1—6,
et dans laquelle le chromophore et les restes mentionnés peuvent porter d'autres substituants, sous réserve que la somme des substituants anioniques soit inférieure à la somme des groupes amino quaternaires et quaternisables, pour la teinture de fibres cellulosiques.

2. Utilisation suivant la revendication 1, caractérisée en ce qu'on utilise des colorants de formule

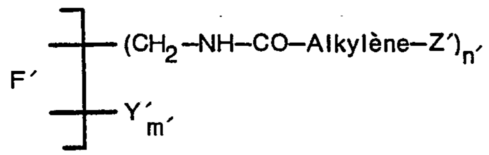

dans laquelle

F' représente un chromophore organique avec au moins 4 noyaux pentagonaux et/ou hexagonaux carbocycliques et/ou hétérocycliques, dont les noyaux peuvent être condensés et peuvent être substitués par les restes mentionnés ci-dessus pour des chromophores,

Z' représente les restes

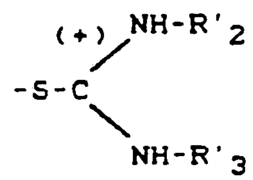 $A^{(-)}$ ou 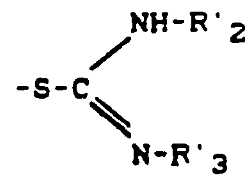

$R'_2$ et $R'_3$ représentent l'hydrogène, un groupe alkyle en $C_1$ à $C_4$, alcényle en $C_2$ à $C_4$, cyclohexyle, phényle ou tolyle, ou bien

$R'_2$ et $R'_3$ forment ensemble un groupe éthylene, triméthylène, vinylène ou o-phénylène,

$A^{(-)}$ désigne un anion,

Y' est un groupe acide sulfonique ou sulfonate,

m' a une valeur de 0—1 et

n' a une valeur de 1—5, et

le nombre de groupes acide sulfonique est inférieur au nombres de groupes amino quaternaires et de groupes amino quaternisables.

3. Utilisation suivant la revendication 1, caractérisée en ce qu'on utilise des colorants ayant un chromophore de la série azine, azo, triarylméthane, xanthène, thioxanthène, phtalocyanine, carbonyle, benzothioxanthène, coumarine, naphtolactame, isoinolénine, formazan, nitro et cyanine.

4. Colorants basiques de formule

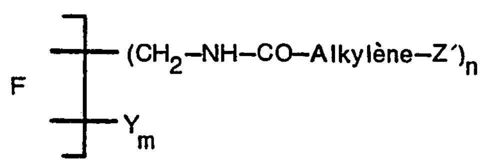

dans laquelle

F, Y, m et n ont la définition indiquée dans la revendication 1 et Z' a la définition indiquée dans la revendication 2, et

$A^{(-)}$ représente un anion.

5. Colorants basiques de formule

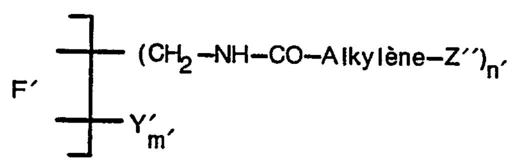

dans laquelle

F', Y', m' et n' ont la définition indiquée dans la revendication 2 et

Z'' représente les restes de formules

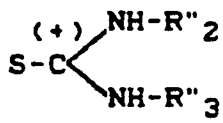 $A^{(-)}$ oder 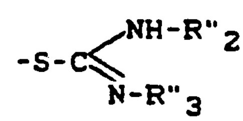

dans lesquelles

$R''_2$ et $R''_3$ représentent l'hydrogène ou un groupe alkylène en $C_2$ ou $C_3$, de préférence le groupe éthylène.

6. Colorants basiques du type dioxazine de formule

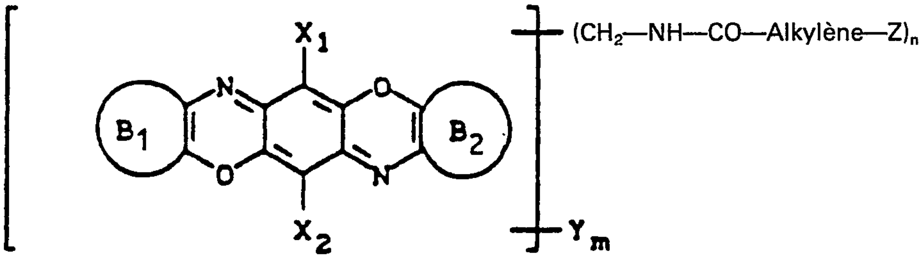

dans laquelle

$X_1$ et $X_2$ représentent, indépendamment l'un de l'autre l'hydrogène, un halogène, un groupe alkyle, cycloalkyle, aryle, alkoxy, aryloxy, CN, $COHN_2$, CONH-alkyle, $CON(alkyle)_2$, CONH-aryle, COO-alkyle, NH-CO-alkyle, NH-aryle, NH—CO-aryle ou NH—CO-hétéroaryle and

$B_1$ et $B_2$ représentent indépendamment l'un de l'autre un noyau benzénique ou un système de noyaux condensés ayant 2 à 4 noyaux carbocycliques et/ou hétérocycliques,

Y, Z, m et n ont la définition indiquée dans la revendication 1,

et les restes cycliques et acycliques et les noyaux $B_1$ et $B_2$ peuvent porter d'autres substituants, sous réserve que la somme des substituants anioniques soit inférieure à la some des groupes amino quaternaires et quaternisables.

7. Colorants dioxaziniques basiques de formule

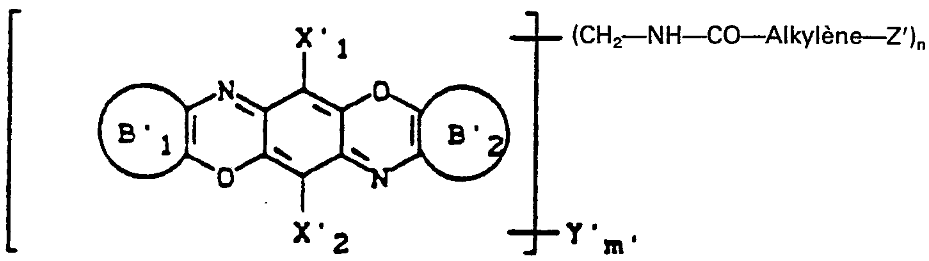

dans laquelle

$X'_1$ et $X'_2$ représentent indépendamment l'un de l'autre l'hydrogène ou un halogène,

$B'_1$ et $B'_2$ représentent indépendamment l'un de l'autre un groupe de la série benzène, naphtalène, fluorène, phénothiazine, diphénylenesulfure, phénanthrène, anthracéne, fluorénone, carbazole ou anthraquinone et

n'' a une de 2—5, et

Y', Z' et m' ont la définition indiquée dans la revendication 2.

8. Colorants azoïques basiques de formule

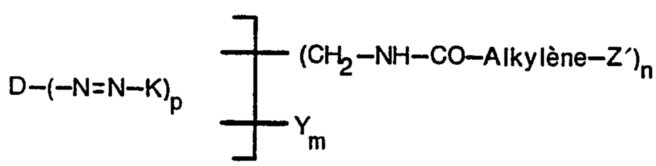

dans laquelle

D représente la reste d'un composant diazotable,

K représente la reste d'un copulant, et

p a la valeur 1 ou 2, et

Y, m et n ont la définition indiquée dans la revendication 1 et

Z' a la définition indiquée dans la revendication 2, et

les composants diazotables et copulants peuvent porter d'autres substituants, sous réserve que la somme des substituants anioniques soit inférieure à la somme des groupes amino quaternaires et quaternisables.

9. Colorants azoïques basiques suivant la revendication 8, de formule

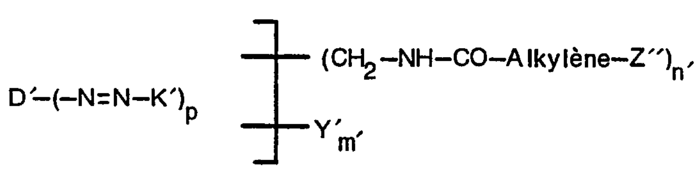

dans laquelle

D' représente une reste de formules

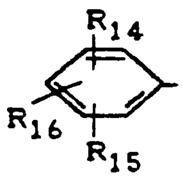, 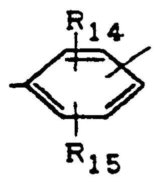, 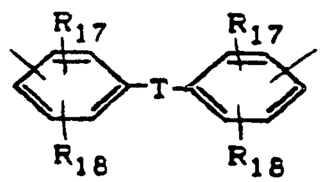 ou 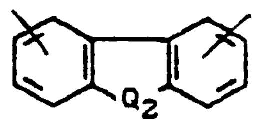

où

$R_{14}$ et $R_{15}$ représentent indépendamment l'un de l'autre l'hydrogène, un groupe alkyle, alkoxy, le fluor, le chlore, le brome ou un groupe NH—Ac,

Ac désigne un groupe alkyl-carbonyle, alkylsulphonyle ou alkylcarbamyle, benzoyle, toluoyle, phénylsulfonyle ou tolylsulphonyle ou -carbamoyle ou un groupe triazinyle, éventuellement substitué,

$R_{16}$ représente l'hydrogène, un groupe alkyle, alkoxy, le chlore, le brome, un groupe NH—Ac ou un reste de formules

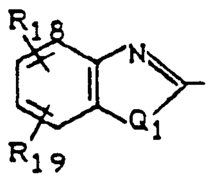, 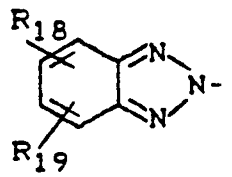 ou 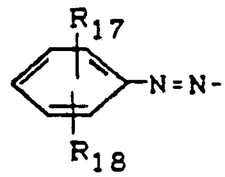

$R_{17}$, $R_{18}$ et $R_{19}$ représentent indépendamment les un des autres l'hydrogène, un groupe alkyle, alkoxy, le chlore ou le brome,

$R_{19}$ représente en outre une valence libre,

$Q_1$ représente NH, un groupe N-alkyle, O or S,

$Q_2$ représente $CH_2$, $R'_{13}N$, O ou S,

$R'_{13}$ est l'hydrogène, un groupe alkyle, alkylcarbonyle ou -sulfonyle ou un groupe benzoyle,

T est une liaison simple ou un chaînon de pontage,

K représente un reste de formule:

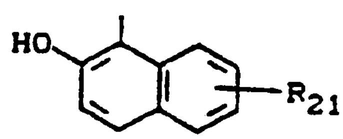

où

$R_{21}$ représente l'hydrogène, un halogène tel que le chlore ou le brome, un groupe OH, alkyle, alkoxy, alkylamino, phénylamino, acylamino, $SO_2NH_2$, $SO_2NH$-alkyle, $SO_2N(Alkyle)_2$;

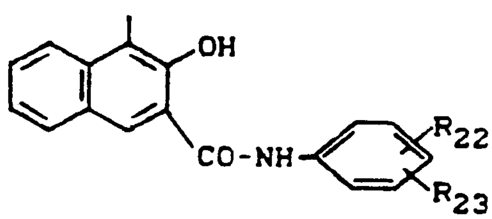

où

$R_{22}$ représente H, un halogène tel que le chlore ou le brome, un groupe alkyle, alkoxy, phénoxy, acylamino, $SO_2NH_2$, $SO_2$-NH-alkyle, $SO_2$-N(alkyle)$_2$, $NO_2$, CN et

$R_{23}$ représente l'hydrogène, un l'halogène tel que le chlore ou le brome, un groupe alkyle, alkoxy;

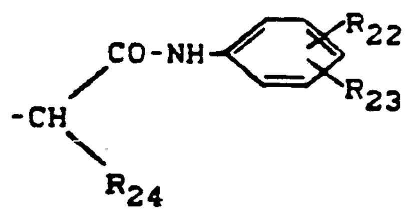

où

$R_{22}$ et $R_{23}$ ont la définition indiquée ci-dessus et
$R_{24}$ représente un groupe $COCH_3$, CO-phényle, COO-alkyle, $CONH_2$ ou CN;

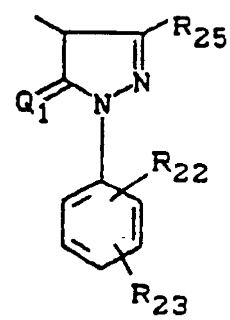

où

$R_{25}$ représente un groupe $CH_3$, $COOCH_3$, $COOC_2H_4$ et
$Q_1$, $R_{22}$ et $R_{25}$ ont la définition indiquée ci-dessus;

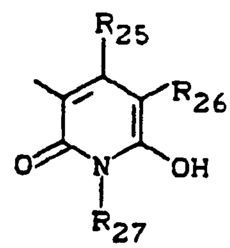

où

$R_{26}$ represénte H, un halogène tel que le chlore ou le brome, un groupe COO-alkyle, $CONH_2$, CN,
$R_{27}$ représente H, un groupe alkyle, phényle, benzyle ou NH—(alkylène en $C_2$—$C_4$)-G, G étant un groupe dialkylamino, 1-pipéridino, 1-morpholino, 1-pipérazino, 1-pyrrolidino, hydroxy ou alkoxy en $C_1$ à $C_4$,

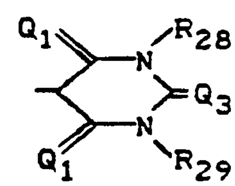 , 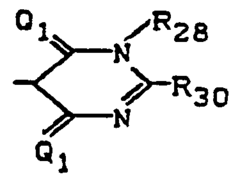 et 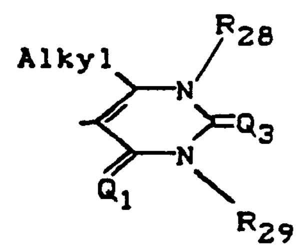

où

les variables $Q_1$ ont indépendamment l'une de l'autre la définition indiquée ci-dessus,
$Q_3$ représente O, S, NH, N—CH, N-phényle,
$R_{28}$, $R_{29}$ représentent H, un groupe alkyle, un groupe phénylène-$R_{21}$,
$R_{30}$ représente H, un groupe alkyle, phénylène-$R_{21}$, alkylamino ou dialkylamino,
Y', m' et n' ont la définition indiquée dans la revendication 2,
Z'' a la définition indiquée dans la revendication 5 et
P a la définition indiquées dans la revendication 8.

10. Colorants basiques du type de triarylméthane de formule

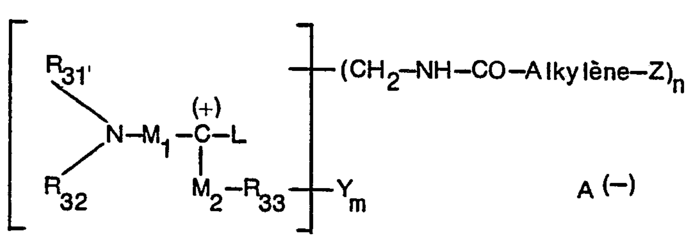

dans laquelle

$M_1$ est un groupe p-phénylène, éventuellement substitué par un radical alkyle ou un halogène,
$M_2$ est un groupe p-phénylène, éventuellement substitué avec un radical alkyle, alkoxy ou un halogène,
$R_{31}$ représente H, un groupe alkyle, cycloalkyle, aryle, hétéroaryle ou aralkyle et
$R_{32}$ représente H, un groupe alkyle ou aralkyle, et

$R_{31}$ et $R_{32}$ peuvent être cyclisés le cas échéant avec inclusion d'un autre hétéroatome du groupe O, S, NH, N-alkyle en un noyau hétérocyclique saturé, ou bien le reste $R_{32}$ peut être cyclisé avec l'atome de carbone en position ortho de $M_1$ en un noyau hétérocyclique partiellement saturé,

$R_{33}$ représente H, un halogène, un groupe alkyle, alkoxy ou $NR_{31}R_{32}$,

L est un reste aromatique ayant la définition suivante: p-phénylène-$R_{34}$, éventuellement substitué avec un radical alkyle ou un halogène, 1,4-naphtylène-$R_{34}$, éventuellement substitué avec un radical alkyle ou un halogène,

$R_{34}$ représentant H, un groupe alkyle, alkoxy, aryloxy ou $NR_{31}R_{32}$,

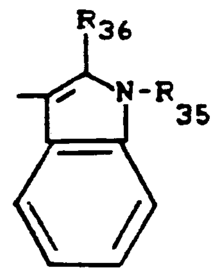

où

$R_{35}$ représente H, ou un groupe alkyle,

$R_{36}$ représente H, un groupe alkyle, un groupe phényle éventuellement substitué par un radical alkyle, alkoxy ou halogéno, un groupe COO-alkyle, $COONH_2$,

$A^{(-)}$ est un anion au cas où la charge du chromophore n'est pas compensée par le reste Y, et

Y, Z, m et n ont la définition indiquée dans la revendication 1.

**Claims**

1. Use of dyestuffs of the formula

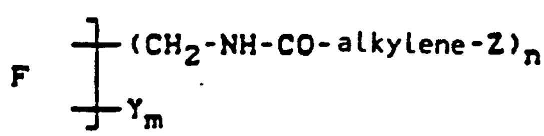

wherein

F stands for an organic chromophore and

Z stands for radicals of the formulae

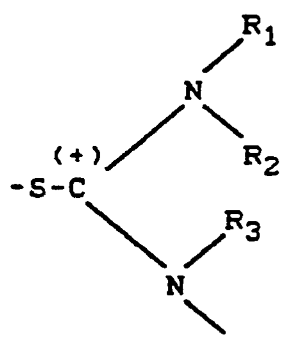

(II) $A^{(-)}$ or

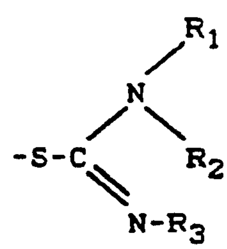

wherein

$R_1$—$R_4$ denote hydrogen, alkyl, cycloalkyl, alkenyl, aryl, aralkyl or a heterocyclic structure or

$R_2$ and $R_3$ represent an optionally substituted amino group or together form a ring or

$R_1$ with $R_2$ and/or $R_3$ with $R_4$ form a ring,

$A^{(-)}$ denotes an anion,

Y denotes an anionic group,

m denotes 0—2 and

n denotes 1—6,

and wherein the chromophore and the radicals mentioned can carry further substituents, with the proviso that the total number of anionic substituents is smaller than the total number of quaternary and quaternisable amino groups, for dyeing cellulose fibres.

2. Use according to Claim 1, characterized in that use is made of dyestuffs of the formula

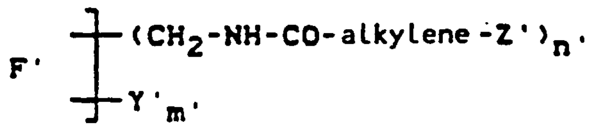

wherein

F′ stands for an organic chromophore having at least 4 carbocyclic and/or heterocyclic five and/or six-rings which can be condensed and be substituted by the radicals mentioned above for chromophores,

Z′ denotes the radicals

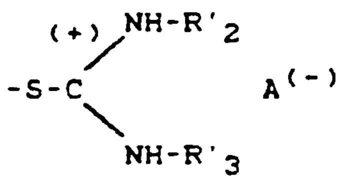

or

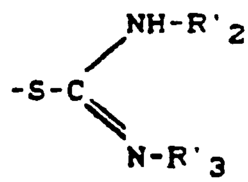

$R'_2$ and $R'_3$ denote hydrogen, $C_1$—$C_4$-alkyl, $C_2$—$C_4$-alkenyl, cyclohexyl, phenyl or tolyl or $R'_2$ and $R'_3$ together denote ethylene, trimethylene, vinylene or o-phyenylene,

$A^{(-)}$ denotes an anion,

Y′ denotes a sulpho or sulphonate group,

m′ denotes 0—1 and

n′ denotes 1—5, and

the number of sulpho groups is smaller than the number of quaternary and quaternisable amino groups.

3. Use according to Claim 1, characterized in that use is made of dyestuffs having a chromophore of the azine, azo, triarylmethane, xanthane, thioxanthene, phthalocyanine, carbonyl, benzothioxanthane, coumarin, naphtholactam, isoindolenine, formazan, nitro and cyanine series.

4. Basic dyestuffs of the formula

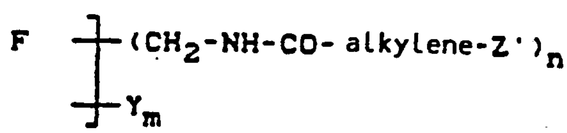

wherein

F, Y, m and n have the denotation indicated in Claim 1 and

Z′ has the denotation indicated in Claim 2 and $A^{(-)}$ stands for an anion,

5. Basic dyestuffs of the formula

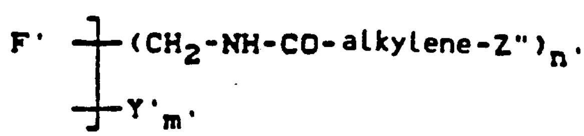

wherein

F′, Y′, m′ and n′ have the denotation mentioned in Claim 2 and

Z″ stands for radicals of the formulae

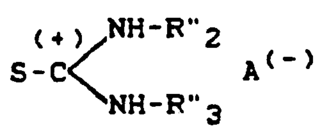

or

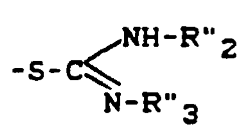

wherein

$R''_2$ and $R''_3$ denote hydrogen or $C_2$—$C_3$-alkylene, preferably ethylene.

6. Basic dioxazine dyestuffs of the formula

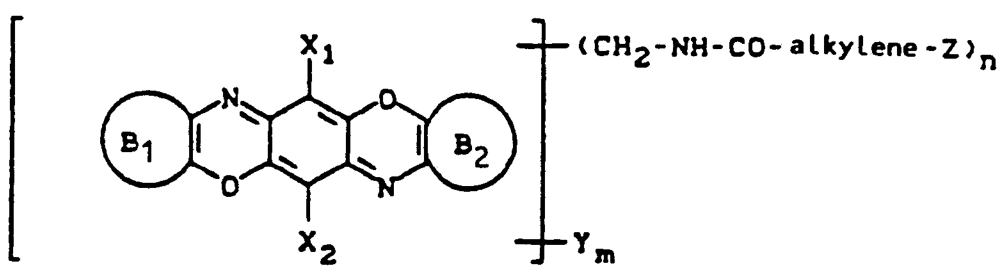

wherein

$X_1$ and $X_2$ independently of each other denote hydrogen, halogen, alkyl, cycloalkyl, aryl, alkoxy, aryloxy, CN, $CONH_2$, CONH-alkyl, $CON(alkyl)_2$, CONH-aryl, COO-alkyl, NH—CO-alkyl, NH-aryl, NH—CO-aryl or NH—CO-heteroaryl and

$B_1$ and $B_2$ independently of each other denote a benzene ring or a fused-on ring system having 2 to 4 carbocyclic and/or heterocyclic rings, and

Y, Z, m and n have the denotation indicated in Claim 1,

and the cyclic and acyclic radicals and the rings $B_1$ and $B_2$ can carry further substituents, with the proviso, that the total number of anionic substituents is smaller than the total number of quaternary and quaternisable amino groups.

7. Basic dioxazine dyestuffs of the formula

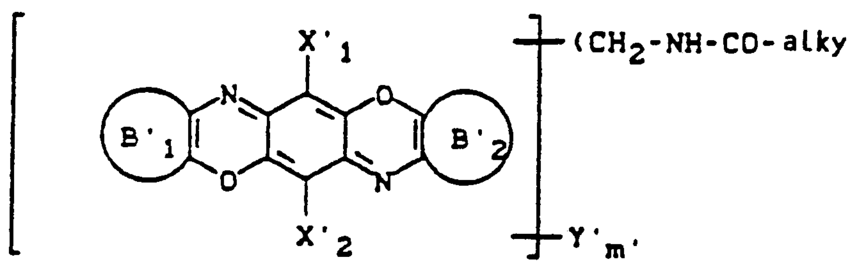

wherein

$X'_1$ and $X'_2$ independently of each other denote hydrogen or halogen,

$B'_1$ and $B'_2$ independently of each other denote a group from the series benzene, naphthalene, fluorene, phenothiazine, diphenylene sulphide, phenanthrene, anthracene, fluorenone, carbazole or anthraquinone and

n'' denotes 2—5 and

Y', Z' and m' have the denotation indicated in Claim 2.

8. Basic azo dyestuffs of the formula

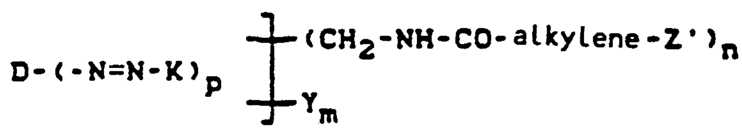

wherein

D denotes the radical of a diazo component,

K denotes the radical of a coupling component and

p denotes 1 or 2 and

Y, m and n have the denotation indicated in Claim 1 and

Z' has the denotation indicated in Claim 2, and

the diazo and coupling components can carry further substituents, with the proviso that the total number of anionic substituents is smaller than the total number of quaternary and quaternisable amino groups.

9. Basic azo dyestuffs according to Claim 8 of the formula

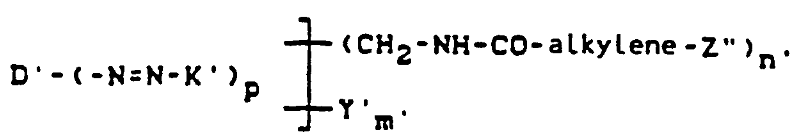

wherein

D' denotes a radical of the formulae

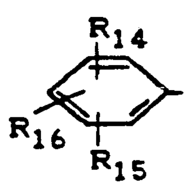 , 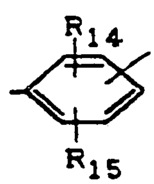 , 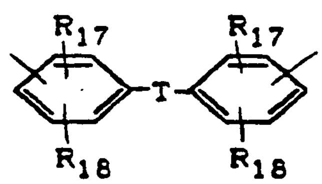 or 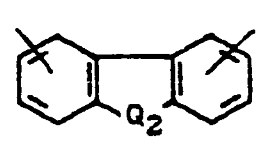

wherein

$R_{14}$, $R_{15}$ independently of each other stand for hydrogen, alkyl, alkoxy, fluorine, chlorine, bromine or NH—Ac,

Ac stands for alkyl-carbonyl, -sulphonyl or -carbamyl, benzoyl, toluoyl, phenyl- or tolyl-sulphonyl or -carbamoyl or optionally substituted triazinyl,

$R_{16}$ stands for hydrogen, alkyl, alkoxy, chlorine, bromine, NH—Ac or a radical of the formulae

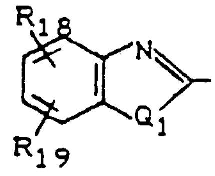 , 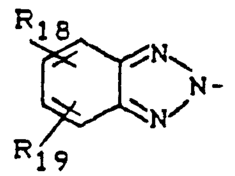 or 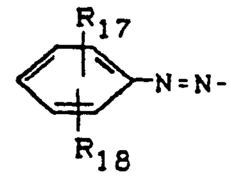

$R_{17}$, $R_{18}$ and $R_{19}$ independently of one another stand for hydrogen, alkyl, alkoxy, chlorine or bromine,
$R_{19}$ additionally stands for a free valency,
$Q_1$ stands for NH, N-alkyl, O or S,
$Q_2$ stands for $CH_2$, $R'_{13}N$, O or S,
$R'_{13}$ stands for hydrogen, alkyl, alkyl-carbonyl or -sulphonyl or benzoyl,
T stands for a direct bond for bridge member,
K stands for a radical of the formulae

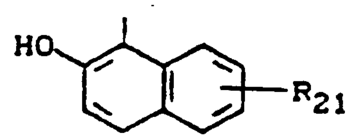

with
$R_{21}$ = H, halogen such as chlorine or bromine, OH, alkyl, alkoxy, alkylamino, phenylamino, acylamino, $SO_2NH_2$, $SO_2NH$-alkyl, $SO_2N(alkyl)_2$;

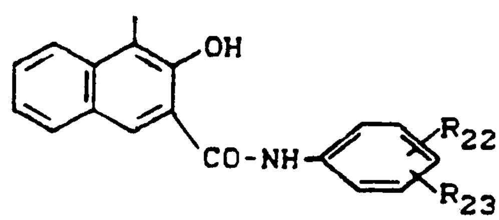

with
$R_{22}$ = H, halogen such as chlorine or bromine, alkyl, alkoxy, phenoxy, acylamino, $SO_2NH_2$, $SO_2$—NH—alkyl, $SO_2$—N(alkyl)$_2$, $NO_2$, CN and $R_{23}$ = H, halogen such as chlorine or bromine, alkyl, alkoxy;

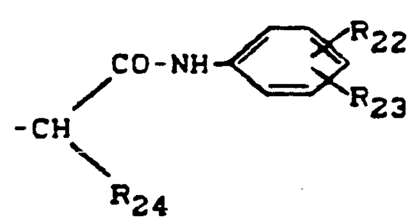

with
$R_{22}$ and $R_{23}$ in the abovementioned denotation and
$R_{24}$ = $COCH_3$, CO-phenyl, COO-alkyl, $CONH_2$ or CN;

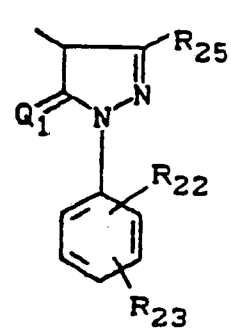

with

$R_{25}$ = $CH_3$, $COOCH_3$, $COOC_2H_4$ and

$Q_1$, $R_{22}$ and $R_{24}$ in the abovementioned denotation;

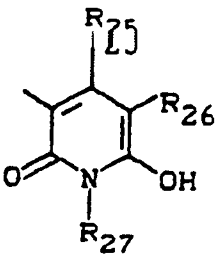

with

$R_{26}$ = H, halogen as chlorine or bromine, COO-alkyl, $CONH_2$, CN,

$R_{27}$ = H, alkyl, phenyl, benzyl or NH—$C_2C_4$-alkylene-G,

wherein

G denotes dialkylamino, 1-piperidino, 1-morpholino, 1-piperazino, 1-pyrrolidino, hydroxyl or $C_1$—$C_4$-alkoxy,

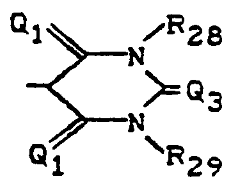 , 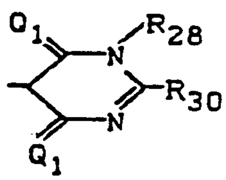 and 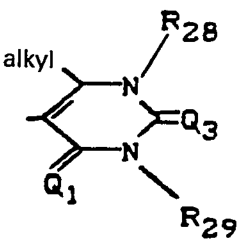

with

$Q_1$ = independently of each other the above mentioned denotation,

$Q_3$ = O, S, NH, N—CH, N-phenyl,

$R_{28}$, $R_{29}$ = H, alkyl, phenylene-$R_{21}$,

$R_{30}$ = H, alkyl, phenylene-$R_{21}$, alkylamino or dialkylamino,

Y′, m′ and n′ have the denotation mentioned in Claim 2,

Z″ has the denotation mentioned in Claim mentioned in Claim 5 and p has the denotation mentioned in Claim 8.

10. Basic triarylmethane dyestuffs of the formula

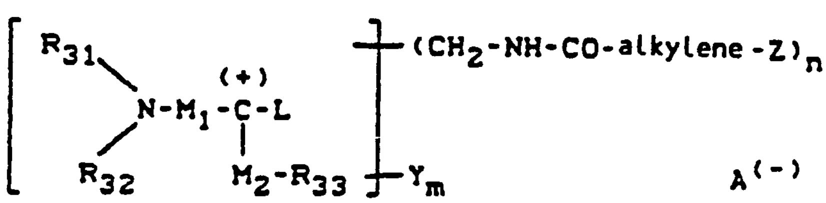

wherein

$M_1$ denotes p-phenylene optionally substituted by alkyl or halogen,

$M_2$ denotes p-phenylene optionally substituted by alkyl, alkoxy or halogen,

$R_{31}$ denotes H, alkyl, cycloalkyl, aryl, heteroaryl or aralkyl and

$R_{32}$ denotes H, alkyl or aralkyl and

$R_{31}$ and $R_{32}$, possibly with inclusion of a further heteroatom from the group O, S, NH and N-alkyl, can be cyclised to form a saturated ring or the radical $R_{32}$ can be cyclised with the o-position C atom of $M_1$ to form a partially saturated, heterocyclic ring,

$R_{33}$ denotes H, halogen, alkyl, alkoxy or $NR_{31}R_{32}$,

L denotes an aromatic radical of the following denotation: p-phenylene-$R_{34}$, optionally substituted by alkyl or halogen,

1,4-naphthylene-$R_{34}$ optionally substituted by alkyl or halogen with $R_{34}$ = H, alkyl, alkoxy, aryloxy or $NR_{31}R_{32}$,

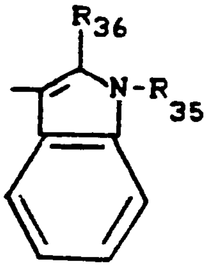

with

$R_{35}$ = H, alkyl,

$R_{36}$ = H, alkyl, phenyl which is optionally substituted by alkyl, alkoxy or halogen, COO-alkyl, $COONH_2$,

$A^{(-)}$ denotes an anion in case the charge of the chromophore is not compensated by the radical Y, and Y, and

Y, Z, m and n have the denotation indicated in Claim 1.